# EUROPÄISCHE PATENTSCHRIFT

(11) **EP 2 637 526 B1**
(45) Veröffentlichungstag und Bekanntmachung des Hinweises auf die Patenterteilung: **22.04.2015**
(21) Anmeldenummer: 11833609.8
(22) Anmeldetag: 11.11.2011
(51) Int. Cl.: A47C 23/00, A47C 27/06

(54) **FEDERELEMENT**
SPRING ELEMENT
ÉLÉMENT RESSORT

(30) Priorität: 11.11.2010 DE 202010015380 U
(43) Veröffentlichungstag der Anmeldung: 18.09.2013
(73) Patentinhaber: Hermann Bock GmbH, 33415 Verl (DE)
(72) Erfinder: BOCK, Klaus, 33415 Verl (DE)
(74) Vertreter: Stenger, Watzke & Ring
(86) Internationale Anmeldenummer: PCT/DE2011/075269
(87) Internationale Veröffentlichungsnummer: WO 2012/062313

(56) Entgegenhaltungen:
- EP-A2- 1 153 558
- WO-A1-2010/113152
- WO-A2-2008/083732
- DE-A1- 3 708 594
- FR-A1- 2 705 215
- FR-A1- 2 736 251
- US-A- 122 111
- US-B1- 6 170 808

## Beschreibung

Die Erfindung betrifft ein Federelement für eine Polstereinrichtung eines Sitz- und/oder Liegemöbels, insbesondere für eine Bettmatratze, mit einem Federkörper und einem daran angeordneten Aufnahmeabschnitt, wobei der Federkörper und der Aufnahmeabschnitt einstückig aus Kunststoff spritzgegossen sind.

Federelemente der eingangs genannten, d. h. gattungsgemäßen Art sind aus dem Stand der Technik an sich gut bekannt, weshalb es eines gesonderten druckschriftlichen Nachweises an dieser Stelle dem Grunde nach nicht bedarf. Es seien daher nur beispielhaft die WO 2005/048781 A und die EP 1 046 361 A genannt. Ferner sei auf die DE 2 015 659 A und die WO 01/50923 A verwiesen, wobei die DE 2 015 659 nicht ein spritzgegossenes Federelement und die WO 01/50923 A nicht ein einstückig ausgebildetes Federelement zeigt.

Weitere Federelemente sind aus der DE 20 2009 006 802 U1, der EP 1 602 303 B1 und der EP 2 220 968 A1 bekannt geworden. Dabei betrifft die DE 20 2009 006 802 U1 ein Federelement, das sich aus einer Basis, einer Deckplatte und einem zwischen Basis und Deckplatte angeordneten Federkörper zusammensetzt. Die Deckplatte ist aus zwei länglichen, nebeneinander angeordneten Teilen gebildet, wobei jeder Teil über einen eigenen Einzelfederkörper gegenüber der Basis abgestützt ist.

Die vorgenannten Federelemente dienen der Verwendung im Zusammenhang mit einer Polstereinrichtung, insbesondere im Zusammenhang mit einer Bettmatratze. Dabei können die Federelemente entweder in entsprechenden Ausnehmungen der Polstereinrichtung angeordnet sein, oder aber dazu dienen, diese abzustützen, wobei sie in diesem Fall von einer Trageinrichtung beispielsweise in der Ausgestaltung eines Lattenrostes abgestützt sind.

Obgleich sich vorbekannte Federelemente im alltäglichen Praxiseinsatz bewährt haben, besteht Verbesserungsbedarf, insbesondere mit Blick auf ein erweitertes Anwendungsspektrum. Es ist deshalb die Aufgabe der Erfindung, ein Federelement der eingangs genannten Art dahingehend weiterzuentwickeln, dass dieses für einen erweiterten Anwendungsbereich eingesetzt werden kann.

Zur Lösung dieser Aufgabe wird mit der Erfindung ein Federelement der eingangs genannten Art vorgeschlagen, dass sich dadurch auszeichnet, dass der Federkörper als in Längsrichtung gestrecktes Ringteil ausgebildet ist, das zwei in einem Mittelabschnitt einstückig ineinander übergehende Ringteilabschnitte aufweist, die jeweils ausgehend vom Mittelabschnitt in Höhenrichtung aufwärtssteigend ausgebildet sind, wobei die in Längsrichtung einander gegenüberliegenden Endbereiche der Ringteilabschnitte unter Zwischenordnung des Aufnahmeabschnitts miteinander verbunden sind.

Das erfindungsgemäße Federelement zeichnet sich durch seine filigrane Geometrieausgestaltung aus, die bei gleichzeitiger Bereitstellung hervorragender Federungseigenschaften eine stabile und robuste Verwendung ermöglicht. In vorteilhafter Weise ist deshalb eine Verwendung des erfindungsgemäßen Federelements über ein weites Anwendungsspektrum möglich.

Der Federkörper ist erfindungsgemäß als in Längsrichtung gestrecktes Ringteil ausgebildet. Dieses Ringteil verfügt über einen ersten Ringteilabschnitt und einen zweiten Ringteilabschnitt. Die beiden Ringteilabschnitte sind in einem Mittelabschnitt ineinander übergehend ausgebildet, und zwar einstückig. Im Bereich des Mittelabschnittes ist das Ringteil bevorzugterweise tailliert ausgebildet, so dass sich insgesamt eine geometrische Ausgestaltung des Ringteils ergibt, die ähnlich zu Schmetterlingsflügeln ist.

Jeweils ausgehend vom Mittelabschnitt sind die Ringteilabschnitte in Höhenrichtung aufwärtssteigend ausgebildet. Im bestimmungsgemäßen Belastungsfall können die Ringteilabschnitte aufgrund dieser Ausgestaltung in Höhenrichtung nach unten einfedern. Die Ringteilabschnitte verfügen jeweils über Endbereiche. Diese sind in Längsrichtung einander gegenüberliegend ausgebildet. Insofern stellt jeder Ringteilabschnitt ausgehend vom Mittelabschnitt zwei Federarme bereit, die anderendseitig über den jeweiligen Endbereich miteinander gekoppelt sind. Dabei gehen die Federarme der einzelnen Ringteilabschnitte einstückig ineinander über, ebenso wie die jeweiligen Endbereiche der Ringteile in die zugehörigen Federarme einstückig übergehen.

Die in Längsrichtung aneinander gegenüberliegenden Endbereiche der Ringteilabschnitte sind unter Zwischenordnung des Aufnahmeabschnittes miteinander verbunden. Durch diese Ausgestaltung sind die Ringteilabschnitte nicht nur über den Mittelabschnitt, sondern auch über den Aufnahmeabschnitt miteinander verbunden. Dabei ist der Aufnahmeabschnitt bevorzugterweise als tailliertes Streifenelement ausgebildet und verfügt mit Bezug auf seine Längserstreckung über eine ballige Ausgestaltung, verfügt also über einen bogenförmigen Verlauf, dessen in Höhenrichtung oberster Abschnitt dem Mittelabschnitt des Federkörpers gegenüberliegend ausgebildet ist.

Der Aufnahmeabschnitt dient im bestimmungsgemäßen Verwendungsfall als Widerlager für eine Polstereinrichtung zur Krafteinleitung. Dabei kann der Aufnahmeabschnitt bei einer Krafteinleitung im bestimmungsgemäßen Verwendungsfall selbst einfedern, und zwar relativ gegenüber dem Federkörper. Vom Aufnahmeabschnitt wird die im bestimmungsgemäßen Belastungsfall eingeleitete Kraft an den Federkörper des Federelements weitergeleitet, welches infolgedessen ebenfalls einfedert. Dabei können sich die beiden Ringteilabschnitte des Federkörpers auseinanderspreizen, wobei die mögliche Spreizbewegung durch den zwischen den beiden Endbereichen der Ringteilabschnitte angeordneten Aufnahmeabschnitt begrenzt ist. Bedingt durch diese erfindungsgemäße Konstruktion ergibt sich bei einer gleichzeitig hervorragenden Federeigenschaft ein stabiler und belastungsfähiger Gesamtaufbau.

Das Federelement ist mit Bezug auf den Mittelabschnitt des Federkörpers symmetrisch ausgestaltet. Im Belastungsfall wird so eine optimierte Krafteinleitung gewährleistet. Ungleichmäßige Beanspruchungen, die zu Ausweichbewegungen führen könnten, lassen sich in vorteilhafter Weise vollends vermeiden.

Der Aufnahmeabschnitt kann im Übrigen Durchbrüche aufweisen, wobei bevorzugterweise vorgesehen ist, dass diese an die Endbereiche der Ringteilabschnitte angrenzend ausgebildet sind. Die Ausgestaltung solcher Durchbrüche hat insbesondere den Vorteil, dass eine optimierte Krafteinleitung in die Ringteilabschnitte erfolgen kann.

Der Mittelabschnitt des Federkörpers weist gemäß einem weiteren Merkmal der Erfindung ringteilaußenseitig zwei einander in Querrichtung des Ringteils gegenüberliegende Verbindungsfortsätze auf, die vorzugsweise einstückig mit dem Ringteil ausgebildet sind.

Diese Verbindungsfortsätze dienen dazu, das Federelement auf einer Trageinrichtung positionssicher anordnen zu können. Bei einer solchen Trageinrichtung kann es sich beispielsweise um die Latte eines Lattenrostes handeln. Die Verbindungsfortsätze können über Durchgangsbohrungen verfügen, durch die hindurch zur Befestigung des Federelements an der Trageinrichtung Befestigungsmittel in Form von Schrauben, Nieten und/oder dergleichen geführt sein können. In einer alternativen Ausgestaltung können die Verbindungsfortsätze auch über Stifte verfügen, die im endfertig montierten Zustand der Federelemente in entsprechende Bohrungen der Trageinrichtung eingreifen.

Die Verbindungsfortsätze können im Übrigen dazu dienen, zwei Federelemente zu einem gemeinsamen Federmodul miteinander zu kombinieren.

Für die Verbindung einzelner Federelemente kann eine Verbindungseinrichtung zum Einsatz kommen. Diese Verbindungseinrichtung verfügt über einen stiftförmigen Grundkörper, der einendseitig und anderendseitig jeweils Verbindungsabschnitte trägt, die korrespondierend zu den Verbindungsfortsätzen der Federelemente ausgebildet sind. Die Verbindungseinrichtung dient als Zwischenglied zwischen zwei miteinander zu verbindenden Federelementen, wobei die Federelemente sowohl in Höhenrichtung übereinander zu einem Federmodul als auch in Längsrichtung einander nachfolgend aufgereiht miteinander kombiniert sein können. Im letztgenannten Fall dienen die Verbindungseinrichtungen zudem als Abstandshalter zwischen jeweils zwei Federelementen.

Gemäß einem weiteren Merkmal verfügt das Federelement über einen zweiten Federkörper. Dieser zweite Federkörper ist dem Grunde nach vergleichbar zum ersten Federkörper ausgebildet, und zwar in Form eines in Längsrichtung gestreckten Ringteils. Auch dieses Ringteil verfügt über einen Mittelabschnitt, von dem ausgehend zwei Ringteilabschnitte ausgebildet sind, die einstückig ineinander übergehen. Darüber hinaus sind die Ringteilabschnitte des zweiten Federkörpers ebenso wie die Ringteilabschnitte des ersten Federkörpers in Höhenrichtung aufwärtssteigend ausgebildet, und zwar ausgehend vom zugehörigen Mittelabschnitt. Das Ringteil des zweiten Federkörpers ist im Bereich des Mittelabschnitts tailliert ausgebildet und nimmt insofern in Übereinstimmung mit der Ausgestaltung des ersten Federkörpers eine Schmetterlingsflügel ähnliche Ausgestaltung an.

Die Ringteilabschnitte des zweiten Federkörpers verfügen über dem zugehörigen Mittelabschnitt gegenüberliegende Endbereiche. Diese sind bevorzugterweise in Richtung auf den Mittelabschnitt verdickt ausgebildet. Dabei stellen diese Verdickungen jeweils eine Art Aufnahmeabschnitt dar, der im bestimmungsgemäßen Verwendungsfall der optimierten Krafteinleitung in die Ringteilabschnitte dient.

Das Ringteil des zweiten Federkörpers umschließt das Ringteil des ersten Federkörpers. Die beiden Ringteile sind bevorzugterweise konzentrisch ausgerichtet. Dabei ist bevorzugterweise vorgesehen, dass die Endbereiche der Ringteilabschnitte des ersten Federkörpers zum Mittelabschnitt ausgerichtet bogenförmig ausgestaltet sind. Aufgrund dieser Ausgestaltung vergrößert sich das Spaltmaß zwischen den jeweiligen Endbereichen der Ringteile des ersten und des zweiten Federkörpers. Aufgrund dieses vergrößerten Spaltmaßes ist die schon vorbeschriebene Verdickung der Endbereiche der Ringteile des zweiten Federkörpers möglich. Im Ergebnis entsteht so ein über den gesamten Umfang des Ringteils des ersten Federkörpers gleichbleibender Abstand zum Ringteil des zweiten Federkörpers.

Die beiden Federkörper sind bevorzugterweise einstückig ausgebildet, wobei die Federkörper unter Zwischenordnung der Verbindungsfortsätze des ersten Federkörpers miteinander verbunden sind. Die Verbindungsfortsätze dienen insofern auch als Abstandshalter zwischen den Ringteilen der beiden Federkörper.

Der Mittelabschnitt des zweiten Federkörpers trägt vorzugsweise ringteilaußenseitig zwei einander in Querrichtung des Ringteils gegenüberliegende Koppelelemente. Diese Koppelelemente sind bevorzugterweise einstückig mit dem Ringteil ausgebildet.

Die Koppelelemente dienen dazu, zwei Federelemente miteinander kombinieren zu können, sei es in Höhenrichtung zu einem Federmodul oder in Längsrichtung zu in Reihe hintereinander angeordneten Federelementen. Dabei kann in schon vorbeschriebener Weise auch eine Verbindungseinrichtung zum Einsatz kommen, wobei die Verbindungseinrichtung Verbindungsabschnitte aufweist, die korrespondierend sowohl zu den Verbindungsfortsätzen als auch zu den Koppelelementen der Federelemente ausgebildet sind.

Sowohl die Federelemente als auch die Verbindungseinrichtungen sind bevorzugterweise in Monosandwichbauweise ausgestaltet, bestehen also aus einem ZweikomponentenKunststoff, wobei die eine Kunststoffkomponente den Kern und die andere Kunststoffkomponente eine den Kern umgebende Hülle ausbildet.

Gemäß einer bevorzugten Ausführungsform der Erfindung sind die Koppelelemente des Federelements mit einer T-förmigen Nut oder einem T-förmigen Verbindungsstück ausgerüstet, in welchem Fall die Koppelelemente als Verbindungsabschnitte bezeichnet werden.

Es ist bevorzugt, einerseits Federelemente mit Verbindungsabschnitten vorzusehen, die eine T-förmige Nut aufweisen, sowie andererseits Federelemente mit Verbindungsabschnitten, die ein T-förmiges Verbindungsstück aufweisen. Dabei sind die T-förmigen Verbindungsstücke korrespondierend zu den T-förmigen Nuten ausgebildet, so dass zwei Federelemente mit entsprechend ausgestalteten Verbindungsabschnitten zu einem gemeinsamen Federmodul miteinander kombiniert werden können, welches Federmodul im endfertig montiertem Zustand über zwei in Höhenrichtung übereinander angeordnete Federelemente verfügt. Dabei lassen sich die Federelemente hinsichtlich ihrer Ausgestaltung mit Bezug auf ihre Verbindungsabschnitte als männliche und weibliche Federelemente bezeichnen. Ein weibliches Federelement und ein männliches Federelement können in der vorbeschriebenen Weise miteinander kombiniert werden.

Die in vorbeschriebener Weise ausgebildeten Verbindungsabschnitte der Federelemente dienen im Übrigen der vereinfachten Anordnung der Federelemente an einer verbindenden Struktur, beispielsweise in der Ausgestaltung einer Verbindungsschiene, die eine Mehrzahl von einzelnen Federelementen aufnimmt und zu Gruppen miteinander kombiniert. Eine solche Verbindungsschiene kann - je nach Ausgestaltung der Verbindungsabschnitte der Federelemente - als Verbindungsmittel über eine T-förmige Nut oder ein T-förmiges Verbindungsstück verfügen.

Es wird desweiteren vorgeschlagen ein Federsystem für eine Unterfederung einer Polster- und/oder Matratzeneinrichtung eines Sitz- und/oder Liegemöbels, mit einer Mehrzahl von Federelementen und einer Mehrzahl von Verbindungsleisten, mittels welcher Federelemente zu Gruppen miteinander kombinierbar sind, wobei die Federelemente Verbindungsabschnitte und die Verbindungsleisten zu den Verbindungsabschnitten der Federelemente korrespondierend ausgebildete Verbindungsmittel aufweisen.

Federsysteme dieser Art sind aus dem Stand der Technik gut bekannt. Sie dienen beispielsweise bei Betten der Unterfederung einer Bettmatratze. Ein Federsystem ist beispielsweise aus der EP 1 358 825 A1 bekannt geworden.

Ein vorbekanntes Federsystem verfügt über Federelemente einerseits sowie Verbindungsleisten andererseits. Dabei können mittels einer Verbindungsleiste mehrere Federelemente zu einer Gruppe miteinander kombiniert werden. Je nach Größe der zu unterfedernden Polster- und/oder Matratzeneinrichtung können eine Mehrzahl von Verbindungsleisten zum Einsatz kommen, wobei jede Verbindungsleiste eine Mehrzahl von Federelementen trägt, die in Längsrichtung der Verbindungsleiste nebeneinander angeordnet sind.

Zur Verbindung der Federelemente mit der Verbindungsleiste ist es aus dem Stand der Technik nach der EP 1 358 825 A1 bekannt geworden, ein Bajonettverschluss ähnliches Hammerkopf-System einzusetzen. Gemäß diesem System ist eine Verbindungsleiste an vorgegebenen Stellen mit einem Hammer- oder Pilzkopf ausgerüstet. Die mit der Verbindungsleiste zu koppelnden Federelemente verfügen über zu den Hammer- oder Pilzköpfen der Verbindungsleiste korrespondierend ausgebildete Bohrungen. Im Montagefall sind die Federelemente mit ihrer jeweiligen Bohrung voran auf einen Hammer- oder Pilzkopf der Verbindungsleiste aufzusetzen, so dass der Hammer- oder Pilzkopf der Verbindungsleiste in die vom Federelement bereitgestellte Bohrung eintauchen kann. Alsdann ist das Federelement um einen Winkelbetrag von z.B. 90° zu verdrehen, so dass es zu einem Verrasten zwischen dem Hammer- oder Pilzkopf der Verbindungsleiste und dem Federelement kommt.

Obgleich sich die vorbeschriebene Ausgestaltung im alltäglichen Praxiseinsatz bewährt hat, ist sie nicht frei von Nachteilen. Zum einen hat sich die Erstausrüstung einer Verbindungsleiste aufgrund der recht aufwendigen Federelementmontage als nachteilig herausgestellt. Zum anderen ist die vorbekannte Konstruktion unflexibel hinsichtlich der Federelementpositionierung. Es besteht insofern Verbesserungsbedarf, weshalb ein Federsystem erwünscht ist, das eine insgesamt vereinfachte Handhabung bei gleichzeitiger Nutzwertsteigerung ermöglicht.

Es wird deshalb ein Federsystem vorgeschlagen, das sich dadurch auszeichnet, dass entweder die Verbindungsabschnitte der Federelemente oder die Verbindungsmittel der Verbindungsleisten eine T-förmig ausgebildete Nut bereitstellen.

Es wird eine Verbindung zwischen einer Verbindungsleiste einerseits und den zugehörigen Federelementen dieser Verbindungsleiste andererseits vorgeschlagen, die über eine T-förmig ausgebildete Nut verfügt. Dabei kann die T-förmige Nut entweder federelementseitig oder verbindungsleistenseitig vorgesehen sein, weshalb es mit der Erfindung vorgeschlagen ist, dass entweder die Verbindungsabschnitte der Federelemente oder die Verbindungsmittel der Verbindungsleisten eine T-förmig ausgebildete Nut bereitstellen.

Im endmontierten Zustand wirkt mit der erfindungsgemäß vorgesehenen T-förmigen Nut ein korrespondierend hierzu ausgebildetes Gegenstück zusammen, das der Nutform entsprechend T-förmig ausgebildet ist. Das Gegenstück wird entweder von den Verbindungsabschnitten der Federelemente oder von den Verbindungsmitteln der Verbindungsschienen bereitgestellt, je nachdem, ob die Verbindungsabschnitte der Federelemente oder die Verbindungsmittel der Verbindungsschiene eine T-förmige Nut tragen. Im endmontierten Zustand greifen jedenfalls die T-förmig ausgebildete Nut und die hierzu korrespondierenden T-förmig ausgebildeten Gegenstücke ineinander.

Die erfindungsgemäße Ausgestaltung erbringt insbesondere den Vorteil, dass eine vereinfachte Montage möglich ist. So können Nut und Gegenstück durch einfaches Ineinanderführen schnell und zuverlässig montiert werden. Darüber hinaus kann je nach Ausgestaltung der Verbindungsleiste eine individuelle Positionierung der Federelemente relativ zu der die Federelemente im montierten Zustand tragenden Verbindungsleiste vorgenommen werden. Es ist insbesondere in einfacher Weise eine individuelle Abstandseinstellung zwischen benachbarten Federelementen in Längsrichtung der Verbindungsleiste möglich.

Die Verbindungsleisten können je nach Anwendungsfall unterschiedlich ausgebildet sein.

Gemäß einer ersten Alternative sind die Verbindungsleisten ähnlich einer Lattenrostlatte in Längsrichtung gradlinig verlaufend ausgebildet. Sie tragen auf ihrer einen Oberseite den Anschluss- oder Verbindungsbereich für die Federelemente. Dabei ist in Form einer mittig und gradlinig über die gesamte Längserstreckung der Verbindungsleisten verlaufende T-förmig ausgebildeten Nut ein Verbindungsmittel zur lösbaren Verbindung mit den Federelementen vorgesehen. Die Federelemente verfügen in der schon vorbeschriebenen Weise ihrerseits über Verbindungsabschnitte, die als T-förmig ausgebildete Gegenstücke zur T-Nut der Verbindungsleisten ausgebildet sind.

Gemäß der vorbeschriebenen Alternative kann eine Verbindungsleiste entweder selbsttragend oder nicht selbsttragend ausgebildet sein. Im Falle einer nicht selbsttragenden Ausgestaltung wird die Verbindungsleiste im endmontierten Zustand von einer Tragunterlage aufgenommen, wobei es sich beispielsweise um die Latte eines Lattenrostes oder auch um eine Gitterkonstruktion handeln kann. Im Falle einer Gitterkonstruktion als Tragunterlage können auch mehrere Verbindungsleisten einer gemeinsamen Tragunterlage zugeordnet sein.

Die Verbindungsleiste ist gemäß der vorbeschriebenen Alternative bevorzugter Weise aus einem Aluminiumprofil gebildet, beispielsweise einem Strangpressprofil.

Gemäß einer alternativen Ausgestaltung ist vorgesehen, dass eine Verbindungsleiste aus einzelnen Abschnitten gebildet ist, die abgewinkelt zueinander ausgerichtet sind. Gemäß dieser Ausführungsform ist eine Verbindungsleiste also nicht in Längsrichtung gradlinig verlaufend ausgebildet, sondern verfügt vielmehr über einzelne Abschnitte, die unter einem Winkel von < 180°, beispielsweise von 110°, 120°, 130° oder 140° abgewinkelt zueinander stehen. Auf diese Weise ergibt sich eine Art "Zick-Zack"-Anordnung. Zur Anbindung von Federelementen an eine solch ausgebildete Verbindungsleiste kommen bevorzugter Weise Verbindungsmittel in Form von Verbindungsstücken zum Einsatz, die im Querschnitt T-förmig ausgebildet sind. Dementsprechend verfügen die Verbindungsabschnitte der Federelemente jeweils über eine T-förmig ausgebildete Nut. Im endmontierten Zustand greifen die T-förmig ausgebildeten Verbindungsstücke der Verbindungsleiste in die jeweiligen Nuten der Verbindungsabschnitte der Federelemente ein.

Die Verbindungsstücke können gemäß einer besonderen Ausgestaltung der Erfindung quer zur Längserstreckung der Verbindungsleiste ausgerichtet sein. Dabei münden die Verbindungsstücke bevorzugter Weise in die Verbindungsleiste in einem jeweiligen Übergangsbereich zwischen zwei Abschnitten der Verbindungsleiste ein.

Mit dem Federsystem wird insgesamt eine einfacher zu handhabende und zu montierende bzw. demontierende Konstruktion vorgeschlagen, die darüber hinaus eine Nutzwertsteigerung bietet, da sie individuellen Ansprüchen besser gerecht wird. Die einzelnen zum Federsystem gehörenden Komponenten wie insbesondere die Federelemente und die Verbindungsleisten können nach dem Baukastenprinzip miteinander kombiniert und systembedingt variiert werden, was die aus dem Stand der Technik vorbekannten Einrichtungen nicht gestatten.

Weitere Merkmale und Vorteile der Erfindung ergeben sich aus der nachfolgenden Beschreibung anhand der Figuren. Dabei zeigen:
- Fig. 1: in einer schematischen Perspektivdarstellung von oben das erfindungsgemäße Federelement gemäß einer ersten Ausführungsform;
- Fig. 2: in einer schematischen Seitenansicht das Federelement nach Fig. 1;
- Fig. 3: in einer schematischen Draufsicht von oben das Federelement nach Fig. 1;
- Fig. 4: in einer schematischen Perspektivdarstellung von oben das erfindungsgemäße Federelement gemäß einer zweiten Ausführungsform;
- Fig. 5: in einer schematischen Seitenansicht das Federelement nach Fig. 4;
- Fig. 6: in einer schematischen Draufsicht von oben das Federelement nach Fig. 4;
- Fig. 7: in einer schematischen Draufsicht von oben das erfindungsgemäße Federelement gemäß Fig. 4 in Kombination mit einer Verbindungseinrichtung;
- Fig. 8: in einer schematischen Perspektivdarstellung ein erfindungsgemäßes Federelement nach Fig. 4 sowie ein erfindungsgemäßes Federelement gemäß einer dritten Ausführungsform, gekoppelt mittels einer Verbindungseinrichtung;
- Fig. 9: in einer schematischen Draufsicht von oben eine Federelementmatte;
- Fig. 10: in einer schematischen Perspektivdarstellung ein Federmodul nach der Erfindung;
- Fig. 11: in einer schematischen Perspektivdarstellung von oben das erfindungsgemäße Federelement gemäß einer weiteren Ausführungsform in einer ersten Ausgestaltung;
- Fig. 12: in einer Draufsicht von oben das Federelement nach Fig. 11:
- Fig. 13: in teilgeschnittener Seitenansicht das Federelement nach Fig. 12 gemäß Schnittline A-A nach Fig. 12;
- Fig. 14: in teilgeschnittener Seitenansicht das Federelement nach Fig. 12 gemäß Schnittlinie B-B nach Fig. 12;
- Fig. 15: in einer schematischen Perspektivdarstellung von oben das erfindungsgemäße Federelement gemäß der weiteren Ausführungsform in einer zweiten Ausgestaltung;
- Fig. 16: in Draufsicht von oben das Federelement nach Fig. 15;
- Fig. 17: in teilgeschnittener Seitenansicht das Federelement nach Fig. 16 gemäß Schnittlinie A-A nach Fig. 16;
- Fig. 18: in teilgeschnittener Seitenansicht das Federelement nach Fig. 16 gemäß Schnittlinie B-B nach Fig. 16;
- Fig. 19: in einer schematischen Perspektivdarstellung eine Verbindungseinrichtung gemäß einer zweiten Ausführungsform;
- Fig. 20: in einer Draufsicht von oben die Verbindungseinrichtung nach Fig. 19;
- Fig. 21: in einer Seitenansicht die Verbindungeinrichtung nach Fig. 19;
- Fig. 22: in einer Frontansicht die Verbindungseinrichtung nach Fig. 19;
- Fig. 23: in einer schematischen Perspektivdarstellung zwei mittels einer Verbindungseinrichtung nach Fig. 19 miteinander kombinierte Federelemente nach Fig. 15;
- Fig. 24: in einer Draufsicht von oben die Federelemente und die Verbindungseinrichtung nach Fig. 23;
- Fig. 25: in einer Seitenansicht die Federelemente und die Verbindungseinrichtung nach Fig. 23;
- Fig. 26: in einer Seitenansicht ein aus zwei Federelementen nach den Fig. 11 und 15 kombiniertes Federmodul;
- Fig. 27: in einer schematischen Perspektivdarstellung das Federmodul nach Fig. 26;
- Fig. 28: in schematischer Perspektivdarstellung eine Verbindungseinrichtung;
- Fig. 29: in einer Seitenansicht die Verbindungseinrichtung nach Fig. 28;
- Fig. 30: in einer Draufsicht von oben die Verbindungseinrichtung nach Fig. 28;
- Fig. 31: in geschnittener Seitenansicht die Verbindungseinrichtung nach Figur 30 gemäß Schnittlinie B-B nach Fig. 30;
- Fig. 32: in einer Seitenansicht zwei mit einer Verbindungseinrichtung nach Fig. 28 miteinander kombinierte Federmodule nach Fig. 26;
- Fig. 33: in schematischer Perspektivdarstellung ein erfindungsgemäßes Federsystem;
- Fig. 34: das Federsystem nach Fig. 33 in einer schematischen Perspektivdarstellung von unten;
- Fig. 35: das Federsystem nach Fig. 33 in einer Draufsicht von oben;
- Fig. 36: in schematischer Explosionsdarstellung eine mit Federelementen bestückte Verbindungsleiste;
- Fig. 37: in einer teilgeschnittenen Frontansicht das Federsystem nach Fig. 33 in einer ersten Einbausituation;
- Fig. 38: in einer Frontansicht das Federsystem nach Fig. 33 in einer zweiten Einbausituation;
- Fig. 39: in schematischer Perspektivdarstellung ein Adapter nach der Erfindung;
- Fig. 40: in schematischer Perspektivdarstellung eine Verbindungsleiste nach der Erfindung gemäß einer ersten Ausführungsform;
- Fig. 41: in schematischer Perspektivdarstellung die Verbindungsleiste nach Fig. 40 mit montiertem Federelement;
- Fig. 42: in schematischer Frontansicht eine Abdeckung nach der Erfindung;
- Fig. 43: in schematischer Perspektivdarstellung eine Verbindungsleiste nach der Erfindung gemäß einer zweiten Ausführungsform;
- Fig. 44: in schematischer Perspektivdarstellung eine Verbindungsleiste nach der Erfindung gemäß einer Abwandlung zur zweiten Ausführungsform;
- Fig. 45: in schematischer Perspektivdarstellung eine Verbindungsleiste nach der Erfindung gemäß einer dritten Ausführungsform;
- Fig. 46: in Draufsicht von unten eine Verbindungsleiste nach Fig. 45 und
- Fig. 47: in Draufsicht von oben eine Verbindungsleiste nach Fig. 45.

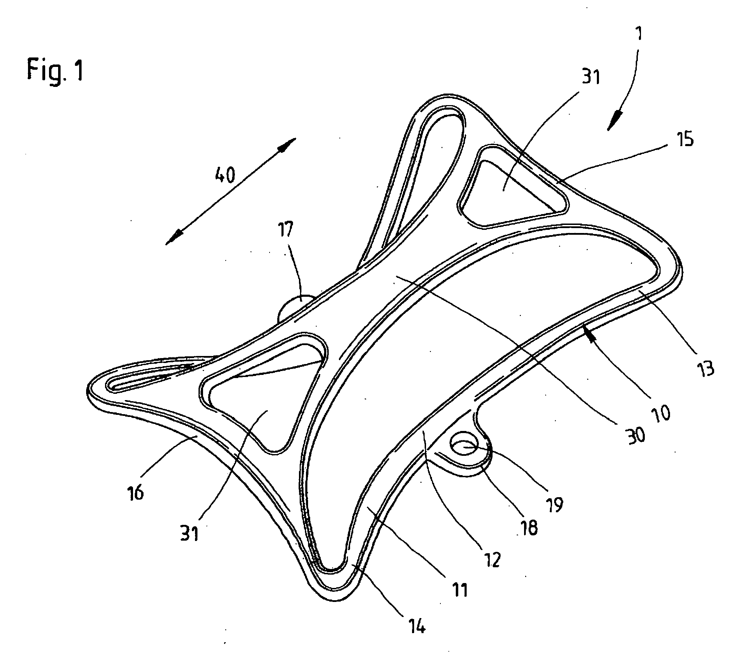

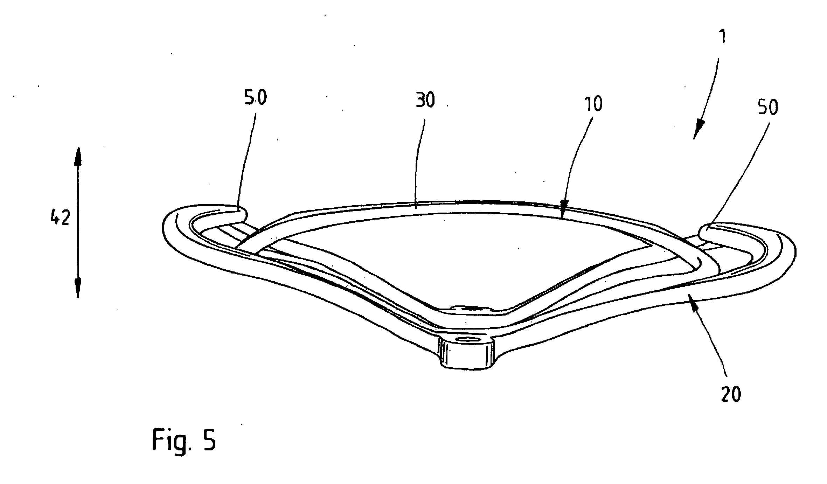

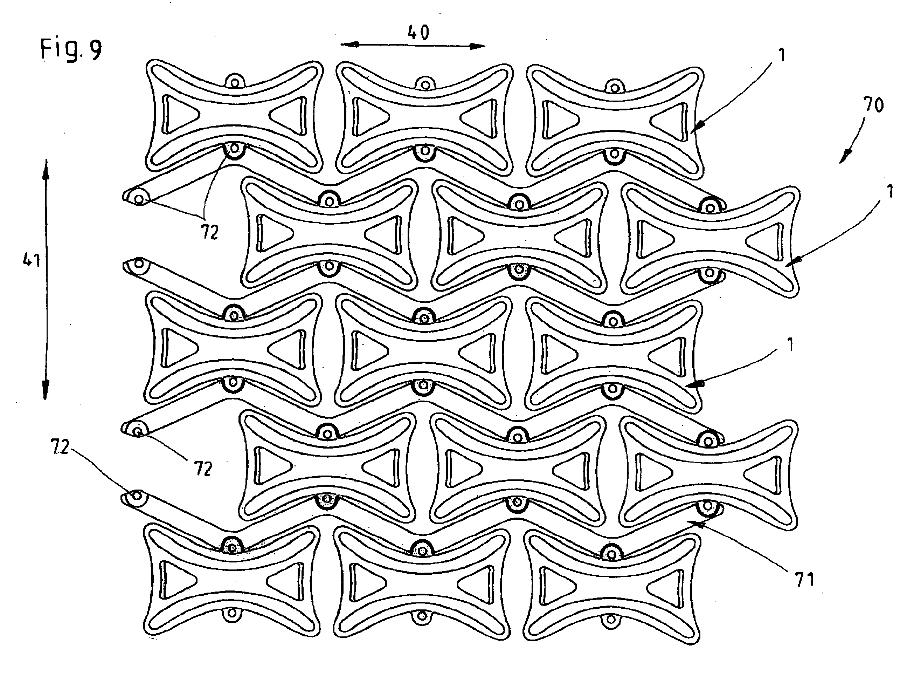

Die Figuren 1 bis 8 lassen das erfindungsgemäße Federelement 1 in unterschiedlichen Ausführungsformen erkennen. Fig. 9 zeigt eine aus mehreren Federelementen 1 gebildete Federelementmatte 70.

Fig. 1 lässt eine erste Ausführungsform des erfindungsgemäßen Federelementes 1 erkennen. Das Federelement 1 verfügt über einen Federkörper 10 und einen Aufnahmeabschnitt 30. Dabei sind der Federkörper 10 und der Aufnahmeabschnitt 30 einstückig aus Kunststoff spritzgegossen ausgebildet, vorzugsweise in Monosandwichbauweise.

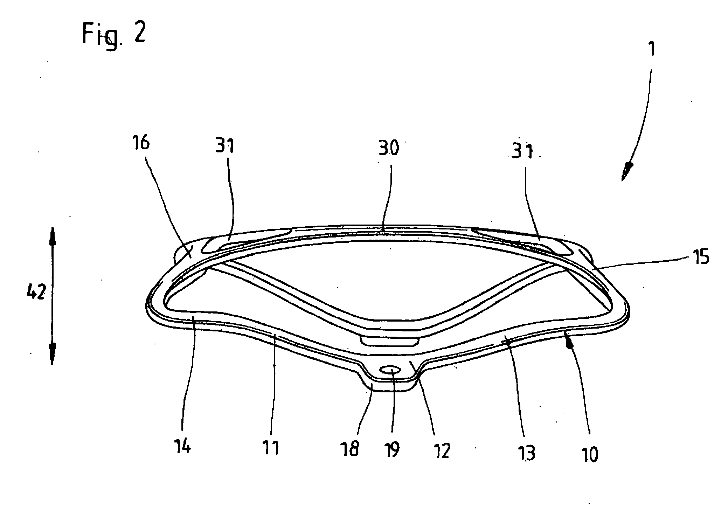

Der Federkörper 10 ist als in Längsrichtung 40 gestrecktes Ringteil 11 ausgebildet. Das Ringteil 11 weist zwei in einen Mittelabschnitt 12 einstückig ineinander übergehende Ringteilabschnitt 13 und 14 auf, die jeweils ausgehend vom Mittelabschnitt 12 in Höhenrichtung 42 aufwärts steigend ausgebildet sind, wie dies insbesondere die Darstellung nach Fig. 2 erkennen lässt. Die in Längsrichtung 40 gegenüberliegenden Endbereiche 15 und 16 der Ringteilabschnitte 13 und 14 sind unter Zwischenordnung des Aufnahmeabschnitts 30 miteinander verbunden.

Gemäß der Ausführungsform nach Fig. 1 ist der Aufnahmeabschnitt 30 mit Durchbrüchen 31 ausgestaltet. Gemäß einer alternativen Ausführungsform kann der Aufnahmeabschnitt 30 auch durchgängig ausgebildet sein, d. h. im Unterschied zu der nach Fig. 1 dargestellten Ausführungsform keine Durchbrüche 31 aufweisen.

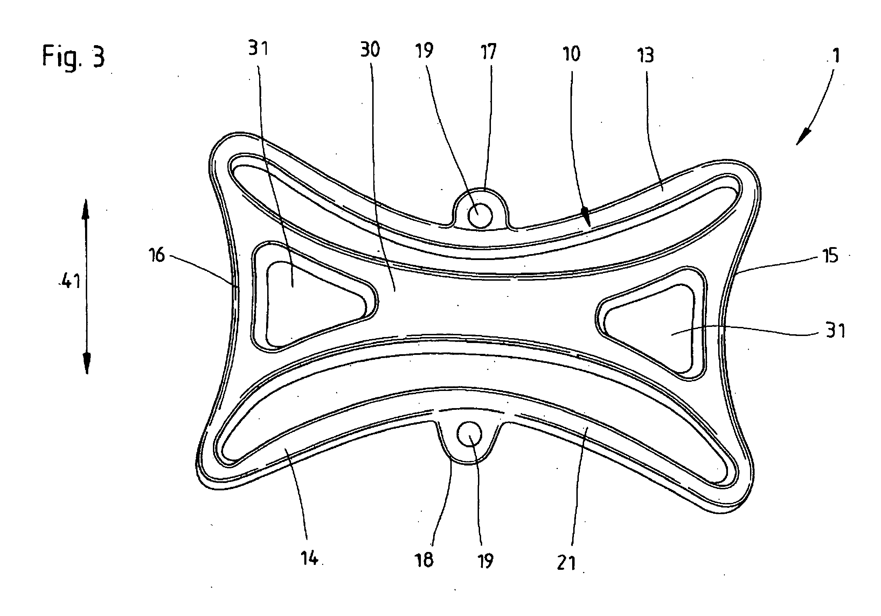

Das Ringteil 11 des Federkörpers 10 ist ebenso wie der Aufnahmeabschnitt 30 im Bereich des Mittelabschnitts 12 tailliert ausgestaltet. Darüber hinaus sind die Endbereiche 15 und 16 der Ringteilabschnitte 13 und 14 jeweils in Richtung auf den Mittelabschnitt 12 ausgerichtet bogenförmig ausgestaltet. Dieser Sachzusammenhang ergibt sich insbesondere aus einer Zusammenschau der Figuren 1 und 3.

Wie insbesondere die Darstellung nach Fig. 2 erkennen lässt, ist der Aufnahmeabschnitt 30 mit Bezug auf seine Längserstreckung 40 ballig ausgebildet. Unter Zwischenordnung dieses Aufnahmeabschnitts 30 sind die Endbereiche 15 und 16 der Ringteilabschnitte 13 und 14 miteinander verbunden.

Das Ringteil 11 verfügt ringteilaußenseitig über zwei einander in Querrichtung 41 des Ringteils 11 gegenüberliegende Verbindungsfortsätze 17 und 18. Diese Verbindungsfortsätze 17 und 18 dienen der Verbindung zweier Federelemente 1 und/oder der Anordnung eines Federelements 1 an einer Trageinrichtung, beispielsweise einer Latte eines Lattenrostes. Zu diesem Zweck verfügen die Verbindungsfortsätze 17 und 18 über Bohrungen 19, in die hinein im bestimmungsgemäßen Verwendungsfall Verbindungsstifte eingreifen. Derartige Verbindungsstifte können trageinrichtungsseitig vorgesehen sein. Alternativ ist es denkbar, die Federelemente 1 mit einer Trageinrichtung zu vernieten oder zu verschrauben, wobei die Bohrungen 19 der Hindurchführung derartiger Verbindungselemente dienen. Alternativ zur gezeigten Ausführungsform können anstelle der Bohrungen 19 auch Stifte und/oder dergleichen vorgesehen sein, wobei in diesem Fall die die Federelemente 1 aufnehmende Trageinrichtung mit entsprechend hierzu korrespondierenden Verbindungsbohrungen ausgestaltet ist.

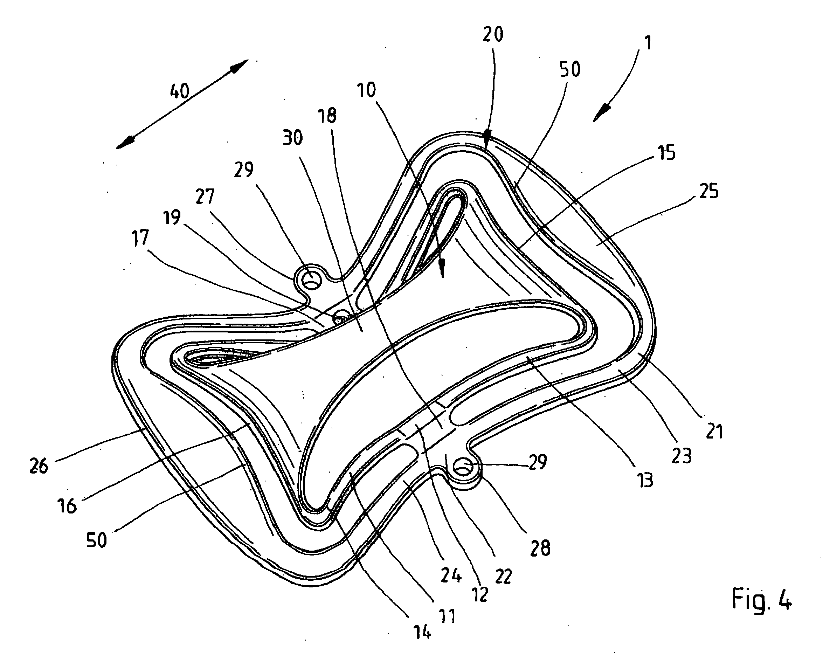

Die Ausführungsform nach den Figuren 4 bis 6 zeigt eine weitere Ausgestaltung der Erfindung. Gemäß dieser Ausgestaltung verfügt das Federelement 1 über einen zweiten Federkörper 20. Dieser ist in Entsprechung des ersten Federkörpers 10 als Ringteil 21 ausgebildet und verfügt ausgehend von einem Mittelabschnitt 22 über zwei Ringteilabschnitte 23 und 24. Diese stellen jeweils Endbereiche 25 und 26 bereit, die in Richtung auf den Mittelabschnitt 22 jeweils eine Verdickung 50 tragen.

Wie insbesondere die Darstellung nach Fig. 4 erkennen lässt, umgibt das Ringteil 21 des zweiten Federkörpers 20 das Ringteil 11 des ersten Federkörpers 10. Dabei sind die beiden Federkörper 10 und 20 einstückig ausgebildet, wobei die Federkörper 10 und 20 unter Zwischenordnung der Verbindungsfortsätze 17 und 18 des ersten Federkörpers 10 miteinander verbunden sind. Diese Verbindungsfortsätze 17 und 18 können jeweils über die schon vorbeschriebenen Bohrungen 19 verfügen, in die zum Zwecke der Verbindung des Federelements 1 mit einer Trageinrichtung und/oder der Verbindung von zwei Federelementen 1 Verbindungsmittel in Form von Schrauben, Nieten, Stiften und/oder dergleichen geführt sein können. Alternativ können die Verbindungsfortsätze auch ohne Bohrung ausgestaltet sein, wie dies beispielhaft anhand des Verbindungsfortsatzes 18 in Fig. 4 dargestellt ist.

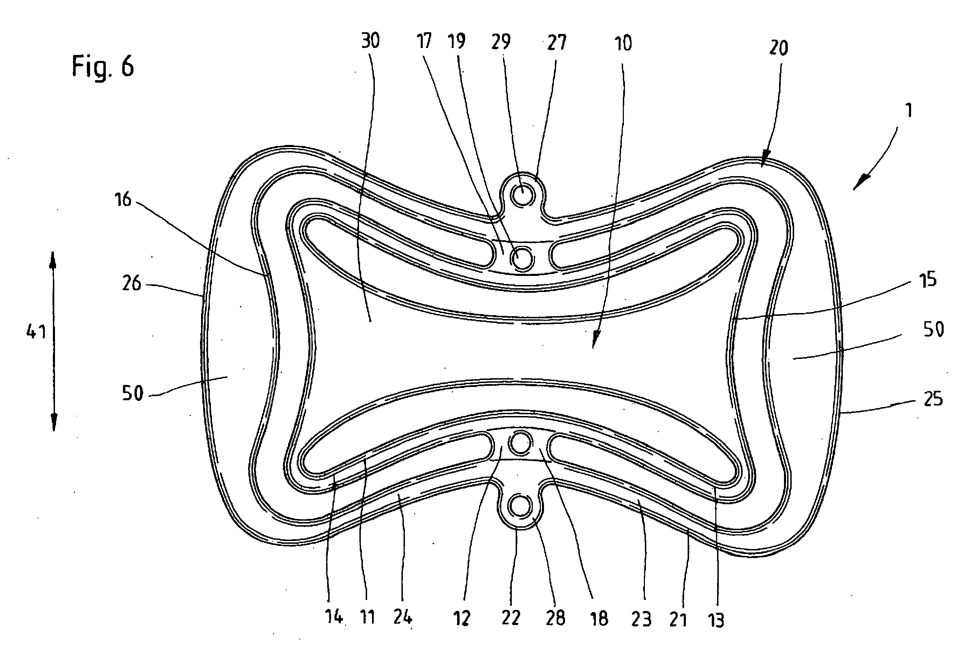

Das Ringteil 21 des zweiten Federkörpers 20 verfügt ringteilaußenseitig über zwei einander in Querrichtung 41 des Ringteils 21 gegenüberliegende Koppelelemente 27 und 28, wie sich insbesondere aus der Darstellung nach Fig. 6 ergibt. Diese Koppelelemente 27 und 28 dienen gleichfalls der Verbindung zweier Federelemente 1 und/oder der Anordnung des Federelements 1 an einer Trageinrichtung. Zu diesem Zweck verfügen die Koppelelemente 27 und 28 über Verbindungseinrichtungen in Form von Bohrungen und/oder Stiften 29, welcher Sachzusammenhang sich insbesondere aus einer Zusammenschau der Figuren 4 und 6 ergibt.

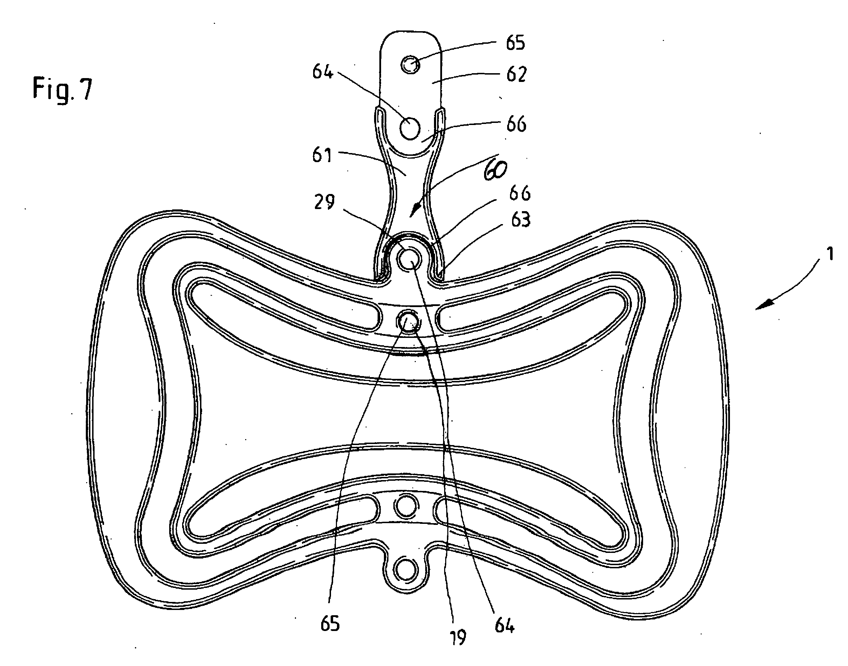

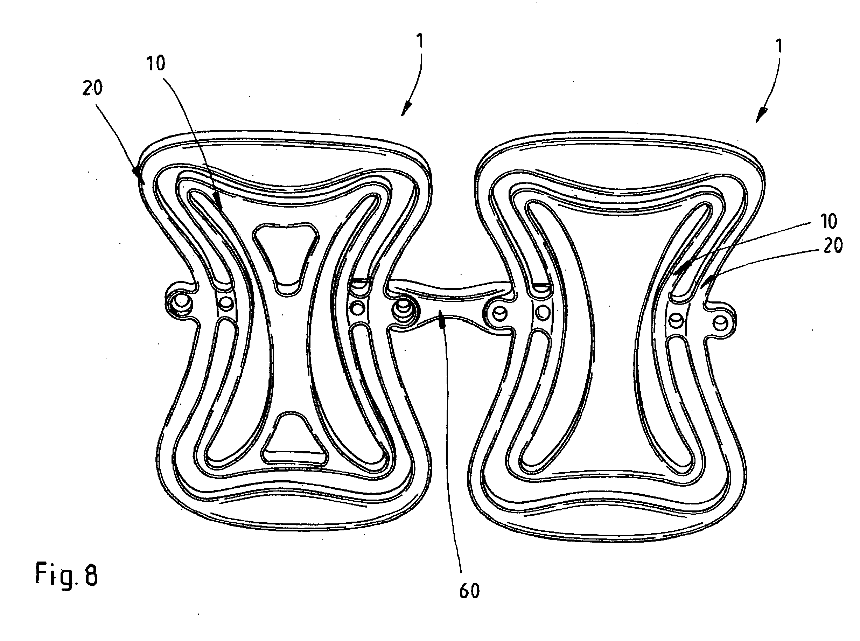

Die Figuren 7 und 8 lassen die beispielhafte Verwendung einer Verbindungseinrichtung 60 erkennen, die zur vorzugsweisen lösbaren Verbindung zweier Federelemente 1 dient. Die Verbindungseinrichtung 60 verfügt über einen stiftförmigen Grundkörper 61. Dieser trägt einendseitig sowie anderendseitig jeweils Verbindungsabschnitte 62 und 63, die korrespondierend zu den Verbindungsfortsätzen 17 und 18 und/oder den Koppelelementen 27 und 28 der Federelemente 1 ausgebildet sind. Darüber hinaus stellen die Verbindungsabschnitte 62 und 63 Ausnehmungen 66 zur Verfügung, in die insbesondere die Koppelelemente 27 und 28 zwecks verdrehsicherer Anordnung der Federelemente 1 an der Verbindungseinrichtung 60 eingreifen, wie dies insbesondere der Darstellung nach Fig. 7 entnommen werden kann.

Die Verbindungsabschnitte 62 und 63 der Verbindungseinrichtung 60 können zudem über Bohrungen 64 und Stifte 65 verfügen, die mit entsprechend ausgestalteten Verbindungsfortsätzen 17 und 18 bzw. Koppelelementen 27 und 28 der Federelemente 1 zusammenwirken, wie sich dies ebenfalls insbesondere aus der Darstellung nach Fig. 7 ergibt.

Dank der Verbindungseinrichtung 60 können die Federelemente 1 aufeinander nachfolgend in Reihe angeordnet werden, in welchem Fall die Verbindungseinrichtung 60 zudem als Abstandshalter zwischen den Federelementen 1 dient, wie insbesondere die Darstellung nach Fig. 8 erkennen lässt, die zudem ein "Doppel"-Federelement mit einem Durchbrüche 31 aufweisenden Aufnahmeabschnitt 30 erkennen lässt.

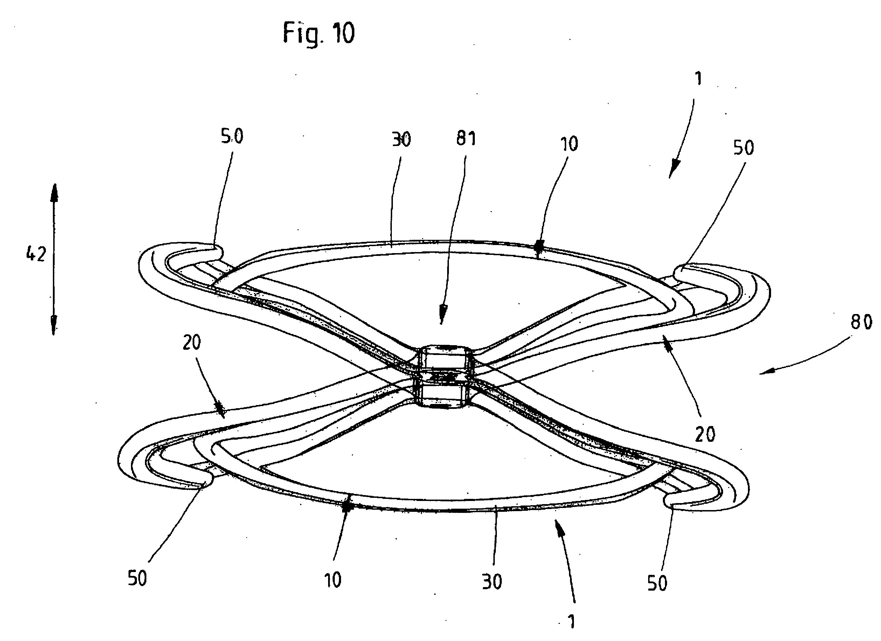

Zwei Federelemente 1 der erfindungsgemäßen Art lassen sich auch in Höhenrichtung 42 miteinander zu einem in Fig. 10 beispielhaft dargestellten Federmodul 80 kombinieren. In einem solchen Fall liegen die Verbindungsfortsätze 17 und 18 bzw. die Koppelelemente 27 und 28 mit ihrer jeweiligen Rückseite einander zugewandt aneinander an, auf welche Weise das Federmodul 80 entsteht, das in Höhenrichtung 42 nach oben sowie nach unten weisende Ringteile 11 bzw. Ringteile 21 aufweist. Der zwischen den beiden Federelementen 1 nach Fig. 10 ausgestaltete Verbindungsbereich 81 ist nur grob schematisch in der Figur wiedergegeben. Bevorzugterweise liegen die Verbindungsfortsätze 17 und 18 bzw. die Koppelelemente 27 und 28 der beiden Federelemente 1 rückwärtig aneinander an, vorzugsweise unter Zwischenschaltung einer Verbindungseinrichtung 60. Es versteht sich im Übrigen von selbst, dass das Federmodul 80 nach Fig. 10 nur eine beispielhafte Ausgestaltung darstellt. Es lassen sich auch andere Federelemente 1 zu einem Federmodul 80 miteinander kombinieren, beispielsweise solche Federelemente 1, wie sie in den Figuren 1 bis 3 dargestellt sind, d. h. solche Federelemente 1, die über nur ein Ringteil 11 verfügen, und insofern als "Einfach"-Federelemente 1 bezeichnet werden können.

Mittels der Verbindungseinrichtung 60 lassen sich auch Federmodule der vorbeschriebenen Art miteinander verbinden, und zwar aufeinander nachfolgend aufgereiht. Dabei verbindet die Verbindungseinrichtung 60 nicht nur zwei Federmodule miteinander, sondern auch die beiden Federelemente 1 eines Federmoduls.

Ein Federelement 1 der erfindungsgemäßen Art bzw. ein aus zwei Federelementen 1 der erfindungsgemäßen Art zusammengesetztes Federmodul kann in eine Polstereinrichtung beispielsweise in Form einer Schaumstoffmatratze eingesetzt sein. Gemäß dieser Ausführungsform verfügt die Polstereinrichtung über eine entsprechende Ausnehmung, die in ihrer Querschnittskontur korrespondierend zu einem Federelement 1 bzw. einem aus zwei Federelementen 1 zusammengesetzten Federmodul angepasst ist. In eine solche Ausnehmung kann ein Federelement 1 bzw. ein Federmodul eingeschoben sein. Es können auch mehrere Federelemente 1 bzw. Federmodule aufeinander nachfolgend zu einer Reihe aufgereiht in eine solche Ausnehmung einer Polstereinrichtung eingebracht sein.

Fig. 9 lässt eine Federelementmatte 70 erkennen. Diese ist aus einer Mehrzahl von Federelementen 1 gebildet, die mittels Verbinder 71 miteinander kombiniert sind. Wie die Darstellung nach Fig. 9 erkennen lässt, kommen eine Mehrzahl von Verbindern 71 zum Einsatz, die in Längsrichtung 40 "Zick-Zack"-förmig ausgebildet sind. Dabei besteht die Besonderheit der Verbinder 71 darin, dass Federelemente 1 einer Reihe, d. h. in Längsrichtung 40 aufeinander nachfolgende Federelemente 1 miteinander verbunden werden, ebenso wie Federelemente 1 benachbarter Reihen, d. h. in Querrichtung 41 benachbarte Federelemente 1. Auf diese Weise wird eine in sich verwobene Mattenstruktur geschaffen, die Beaufschlagungskräfte in optimierter Weise in die Federelemente 1 einleiten lässt. Anstelle eines "Zick-Zack"-förmig verlaufenden Verbinders 71 kann auch ein geradliegender laufender Verbinder 71 zum Einsatz kommen.

Die Verbinder 71 sind bevorzugterweise als Streifenelemente aus Kunststoff ausgebildet und stellen Verbindungsstellen 72 bereit, die jeweils über eine Bohrung oder einen Stift verfügen, der eine Ankopplung zu einem Federelement 1 gestattet. Dabei kommen für eine Verbindung mit dem Verbinder 71 je nach Ausgestaltung des Federelements entweder die Verbindungsfortsätze 17 und 18 bzw. die Koppelelemente 27 und 28 zum Einsatz, wobei die Verbindungsstellen 72 des Verbinders 71 korrespondierend zu den Verbindungsfortsätzen 17 und 18 bzw. den Koppelelementen 27 und 28 ausgebildet sind.

Wie die Darstellung nach Fig. 9 ferner erkennen lässt, sind die Federelemente 1 der Federelementmatte 70 in Längsrichtung 40 um ein halbes Federelement 1 versetzt zueinander in Reihen angeordnet. Es ergibt sich so eine kompakte und keine Fehlstellen aufweisende Struktur. Lediglich randseitig, d. h. mit Bezug auf die Zeichnungsebene nach Fig. 9 links- und rechtsseitig ergibt sich jeweils in jeder zweiten Reihe eine Lücke von der Größe eines halben Federelements 1. Diese Lücken vermögen den Federungskomfort der Federelementmatte 70 aber nicht zu schmälern, da sie ausschließlich im kaum wenn überhaupt belasteten Endbereich systembedingt auftreten. Im Kernbereich der Federelementmatte 70 greifen die Federelemente 1 wechselseitig vielmehr "auf Lücke" ineinander ein, was eine gut verteilte Krafteinleitung in die Federelementmatte 70 gestattet, so dass der Federungskomfort gegenüber aus dem Stand der Technik bekannten Federelementmatten deutlich erhöht ist.

Die Ausgestaltung der Federelementmatte 70 nach Fig. 9 ist im Übrigen in denkbar einfacher Weise möglich. So lassen sich die Verbinder 71 als Endlosband herstellen. Diese können je nach späterer Verwendung individuell abgelängt und an ihren Verbindungsstellen 72 mit einer entsprechenden Anzahl von Federelementen 1 bestückt werden. In Querrichtung 41 kann die Federelementmatte 70 quasi endlos ausgebildet werden, und zwar durch Ankopplung immer weiterer Verbinder 71 bzw. Federelemente 70. Im Ergebnis kann in vorteilhafter Weise eine Federelementmatte 70 ausgestaltet werden, die an individuelle Größenverhältnisse in einfacher Weise angepasst werden kann.

Es liegt im Übrigen im Rahmen der Erfindung, die Federelementmatte 70 nach Fig. 9 auch mit anderem als den in Fig. 9 dargestellten Federelementen 1 auszugestalten. Zur Bildung der Federelementmatte 70 können sowohl "Einzel"-Federelemente 1 als auch "Doppel"-Federelemente 1 zum Einsatz kommen, d. h. Federelemente 1, die über nur ein Ringteil 11 oder über zwei Ringteile 11 und 21 verfügen. Darüber hinaus können mittels der Verbinder 71 nicht nur Federelemente 1 sondern auch Federmodule 80 in Entsprechung der Darstellung nach Fig. 10 miteinander verbunden werden. Darüber hinaus ist auch eine Kombination von in ihrer Ausgestaltung unterschiedlichen Federelementen 1 und/oder Federmodulen 80 mittels des Verbinders 71 möglich. Insofern besteht verwenderseitig Wahlfreiheit.

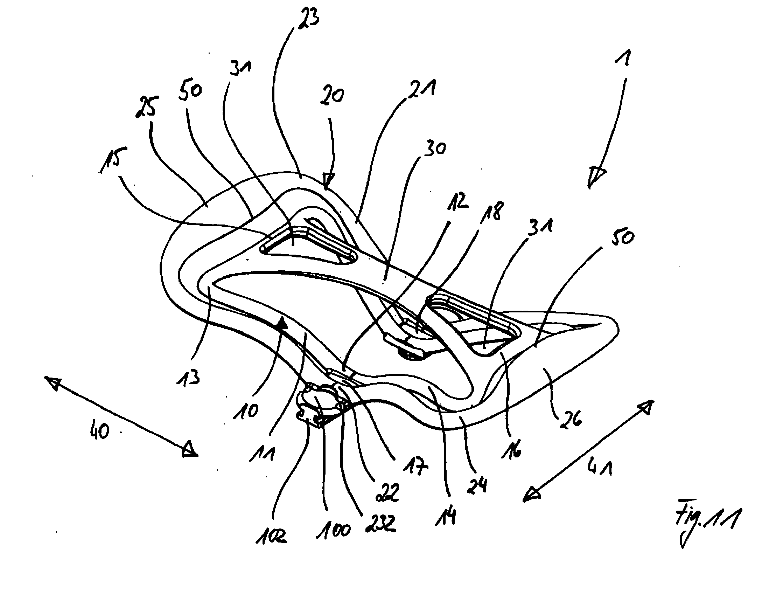

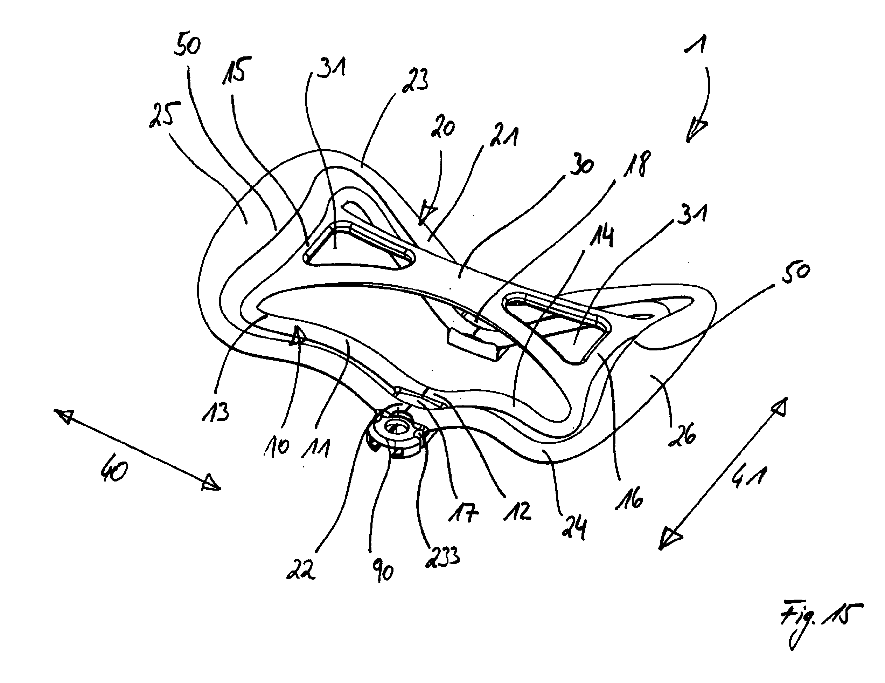

Die Fign. 11 bis 18 zeigen ein erfindungsgemäßes Federelement 1 in einer alternativen Ausgestaltungsform, wobei die Fign. 11 bis 14 eine erste Variante und die Fign. 15 bis 18 eine zweite Variante betreffen.

Das Federelement 1 nach den Fign. 11 bis 14 einerseits bzw. nach den Fign. 15 bis 18 andererseits entspricht im Wesentlichen der Ausführungsform nach den Fign. 4 bis 6. Gleiche Elemente sind deshalb mit gleichen Bezugszeichen versehen. Die alternative Ausgestaltung ergibt sich aufgrund der Verbindungsabschnitte 90 und 91 mit Bezug auf die erste Variante nach den Fign. 11 bis 14 bzw. aufgrund der Verbindungsabschnitte 100 und 101 mit Bezug auf die zweite Variante nach den Fign. 15 bis 18.

Gemäß der Ausführungsform nach den Fig. 4 bis 6 trägt das Federelement 1 außenringseitig Koppelelemente 27 und 28, die jeweils über eine Bohrung 29 verfügen. Im Unterschied hierzu verfügt das Federelement 1 nach den Fign. 11 bis 18 nicht über Koppelelemente 27 bzw. 28, sondern über erste und zweite Verbindungsabschnitte 90 und 91 bzw. 100 und 101.

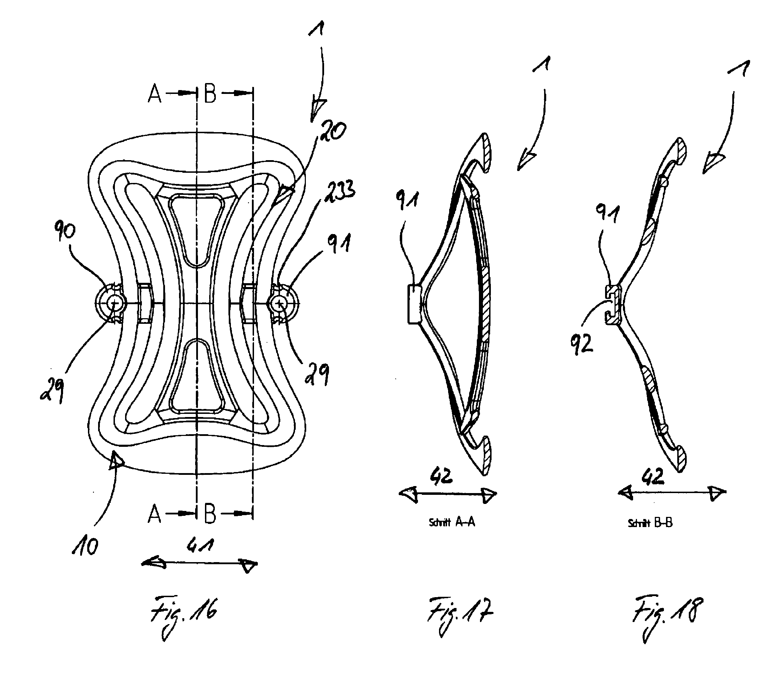

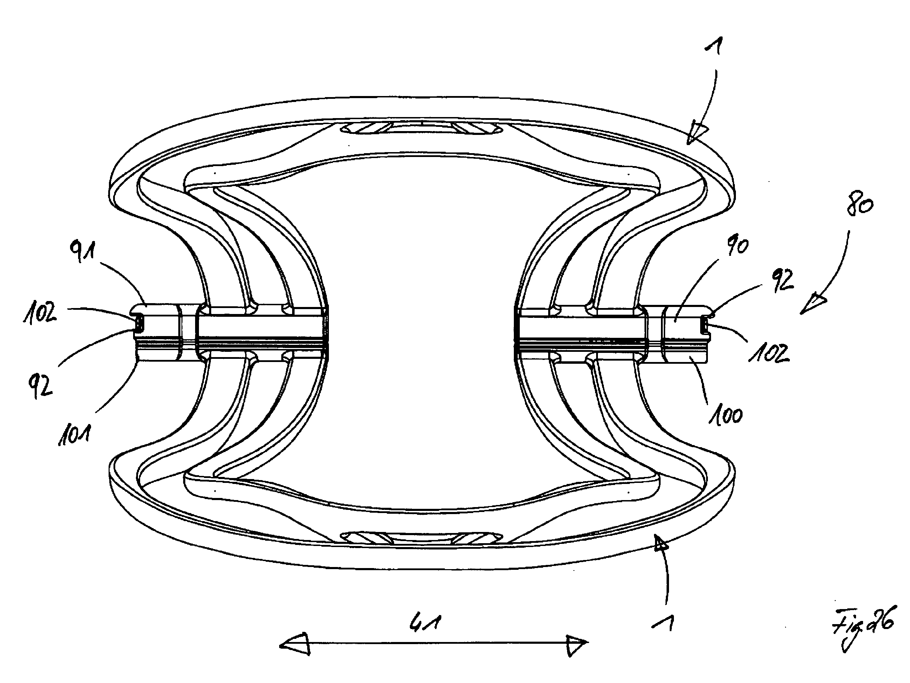

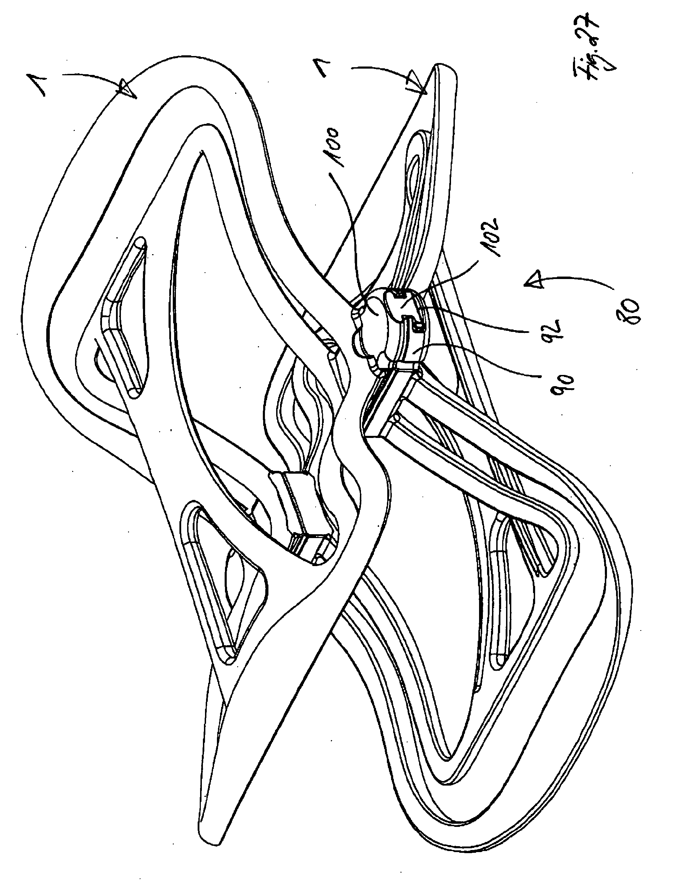

Die Verbindungsabschnitte 100 bzw. 101 nach der ersten Variante gemäß der Fign. 11 bis 14 stellen jeweils ein T-förmiges Verbindungsstück 102 zur Verfügung. Die Verbindungsabschnitte 90 bzw. 91 nach der zweiten Variante gemäß der Fign. 15 bis 18 stellen indes jeweils eine T-förmige Nut 92 bereit. Dabei sind die T-förmige Nut 92 und das T-förmige Verbindungsstück 102 korrespondierend zueinander ausgebildet, was es gestattet, ein Federelement 1 nach der ersten Variante gemäß der Fign. 11 bis 14 mit einem Federelement 1 nach der zweiten Variante gemäß der Fign. 15 und 18 miteinander zu einem Federmodul 80 miteinander zu kombinieren, wie es in den Fign. 26 und 27 dargestellt ist.

Der Vorteil der T-förmigen Ausgestaltung der Nut 92 einerseits und des Verbindungsstücks 102 andererseits besteht darin, dass eine lagesichere und positionsgenaue Verbindung zweier Federelemente 1 zu einem Federmodul 80 sichergestellt ist. Zum Zwecke der Montage ist ein männliches Federelement 1, wie es beispielsweise in Fig. 11 gezeigt ist, hinsichtlich seiner Verbindungsabschnitte 100 und 101 in Querrichtung 41 einzufedern, das heißt die Verbindungsabschnitte 100 und 101 sind in Querrichtung 41 aufeinander zuzubewegen. In diesem eingefederten Zustand kann das Federelement 1 in ein weibliches Federelement, wie es in Fig. 15 dargestellt ist, eingesetzt werden, und zwar derart, dass die von den Verbindungsabschnitten 100 und 101 getragenen Verbindungsstücke 102 von innen in die Nuten 92 der Verbindungsabschnitte 90 und 91 einfädeln. In dieser eingefädelten Position kann das männliche Federelement 1 wieder auffedern, infolge dessen die Verbindungsabschnitte 100 und 101 in Querrichtung 41 wieder auseinander federn, infolge dessen die davon getragenen Verbindungsstücke 102 in ihre bestimmungsgemäße Endposition relativ gegenüber den Nuten 92 der Verbindungsabschnitte 90 und 91 des anderen Federelements verfahren. In der endmontieren Stellung schließen die Federelemente 1 endseitig bündig ab, wie insbesondere die Seitenansicht nach Fig. 26 erkennen lässt.

Die männlichen Federelemente 1 nach den Fign. 11 bis 14 verfügen hinsichtlich der Verbindungsabschnitte 100 und 101 bevorzugter Weise über Rastausnehmungen 232. Die Verbindungsabschnitte 90 und 91 der weiblichen Federelemente gemäß der Fig. 15 bis 18 verfügen über zu diesen Rastausnehmungen 232 korrespondierend ausgebildete Rastnasen 233. Im endmontierten Zustand greifen die Rastnasen 233 der weiblichen Federelemente 1 in die Rastausnehmungen 232 der männlichen Federelemente 1 ein, so dass ein ungewolltes Lösen der Federelemente 1 in Querrichtung 41 nicht möglich ist. In Höhenrichtung 42 ist ein unbeabsichtigtes Lösen der beiden Federelemente 1 indes durch die T-förmig ausgebildete Verbindung der Nuten 92 einerseits und der Verbindungsstücke 102 andererseits unterbunden, so dass insgesamt eine lagesichere und positionsfeste Verbindung der beiden Federelemente 1 sichergestellt ist.

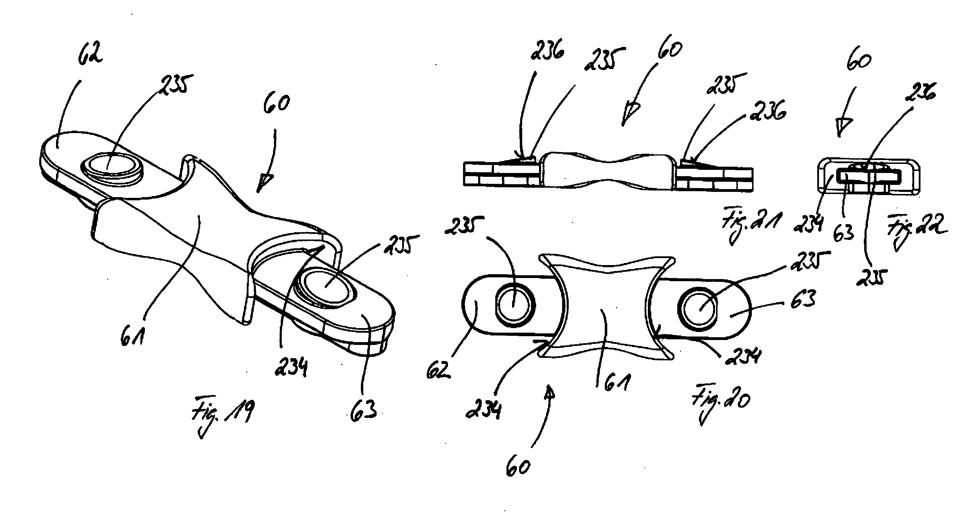

Zur Verbindung zweier weiblicher Federelemente nach den Fign. 15 bis 18 ist eine Verbindungseinrichtung 60 vorgesehen, wie sie in den Fign. 19 bis 22 dargestellt ist.

Eine zwei Federelemente 1 miteinander verbindende Verbindungseinrichtung 60 verfügt über einen Grundkörper 61, an dem sich zwei Verbindungsabschnitte 62 und 63 anschließen, sowie sich dies insbesondere aus der Darstellung nach Fig. 20 ergibt. Dabei stellt der Grundkörper 61 jeweils verbindungsabschnittseitig eine teilkreisförmige Innenkontur 234 bereit, die korrespondierend zur endseitigen Ausgestaltung der Verbindungsabschnitte 90 und 91 des Federelements 1 ausgebildet ist.

Zum Zwecke der verrastenden Verbindung der Verbindungseinrichtung 60 mit zwei Federelementen 1 tragen die Verbindungsabschnitte 62 und 63 der Verbindungseinrichtung 60 jeweils einen Rastfortsatz 235. Dieser Rastfortsatz 235 greift im endmontierten Zustand in eine entsprechende Bohrung 29 der Federelemente 1 ein.

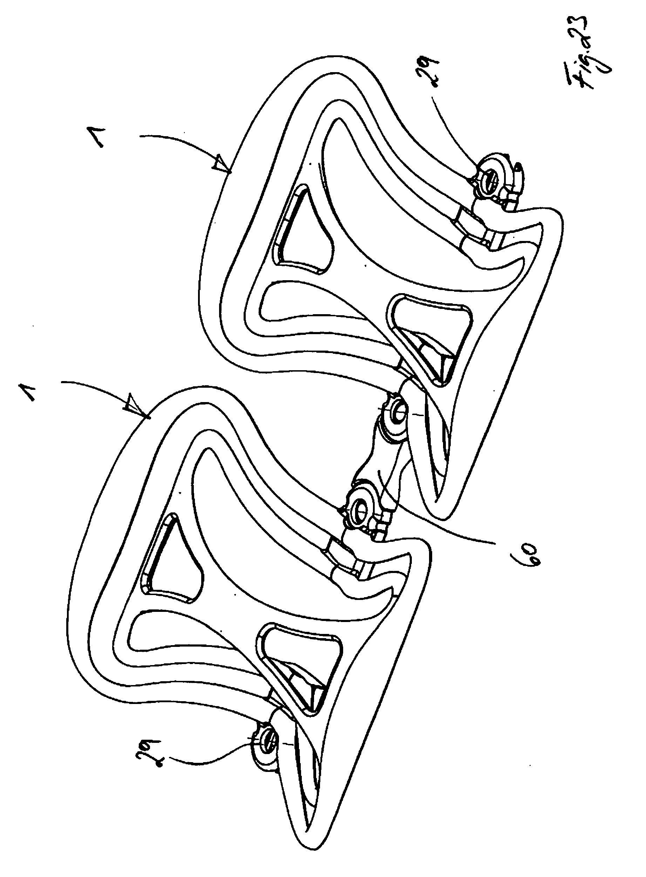

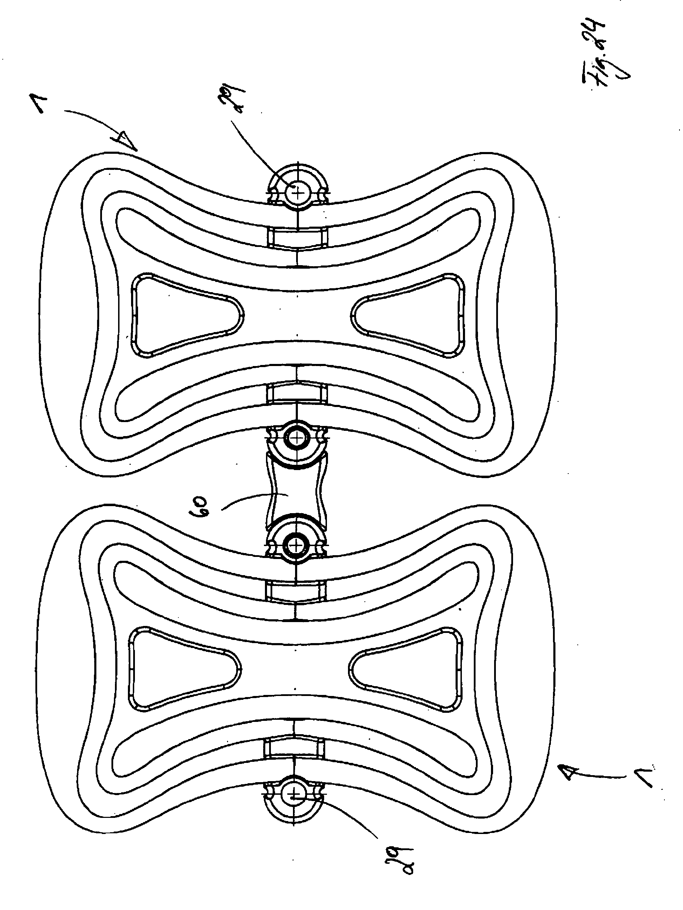

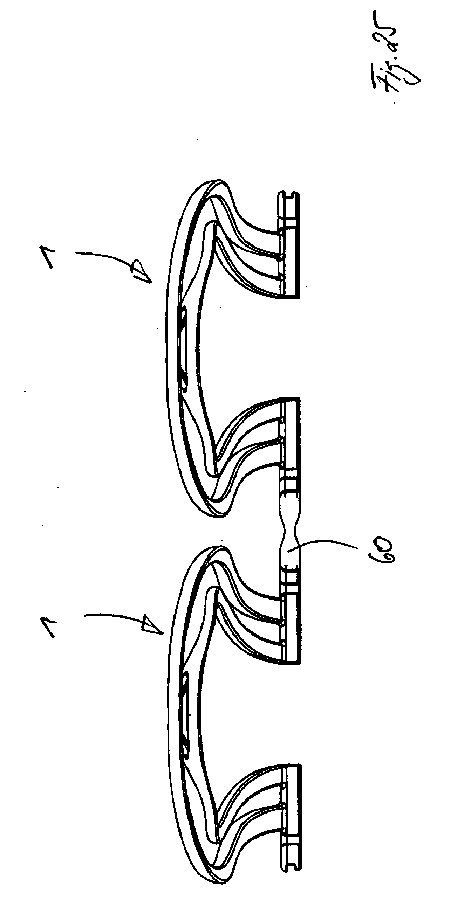

Zwei miteinander mittels einer Verbindungseinrichtung 60 miteinander kombinierte Federelemente 1 lassen in unterschiedlichen Ansichten die Figuren 23, 24 und 25 erkennen.

Die Rastfortsätze 235 stellen, wie insbesondere die Darstellungen nach den Fign. 21 und 22 erkennen lassen, eine schräg gestellte Abschlussfläche 236 zur Verfügung. Aufgrund dieser Schrägstellung wird ein vereinfachtes Einführen des jeweiligen Verbindungsabschnittes 62 bzw. 63 in die zugehörige T-förmige Nut 92 des Federelements 1 bewerkstelligt.

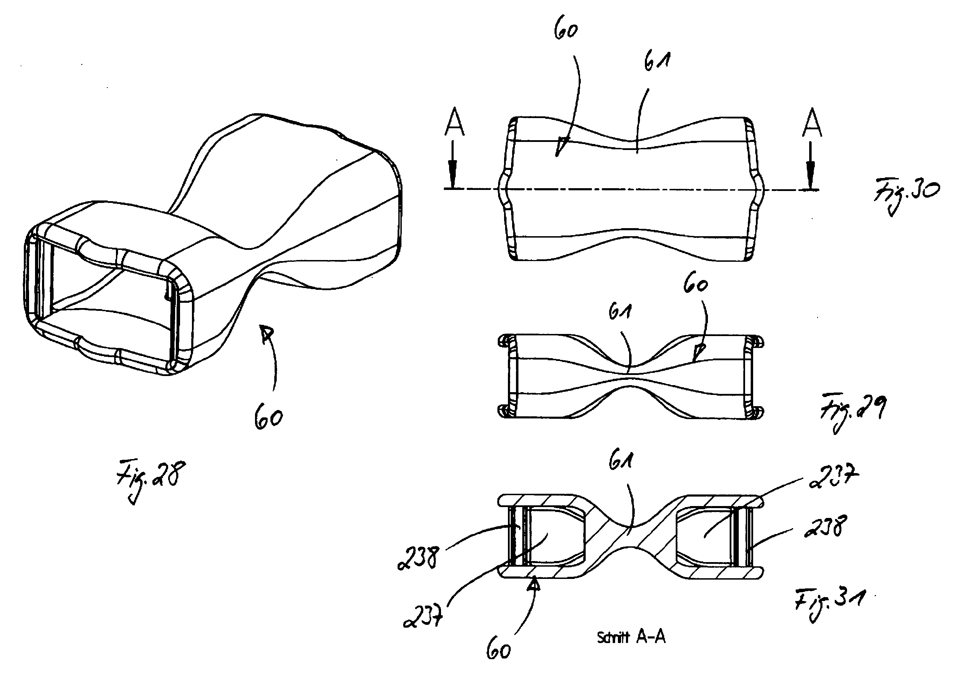

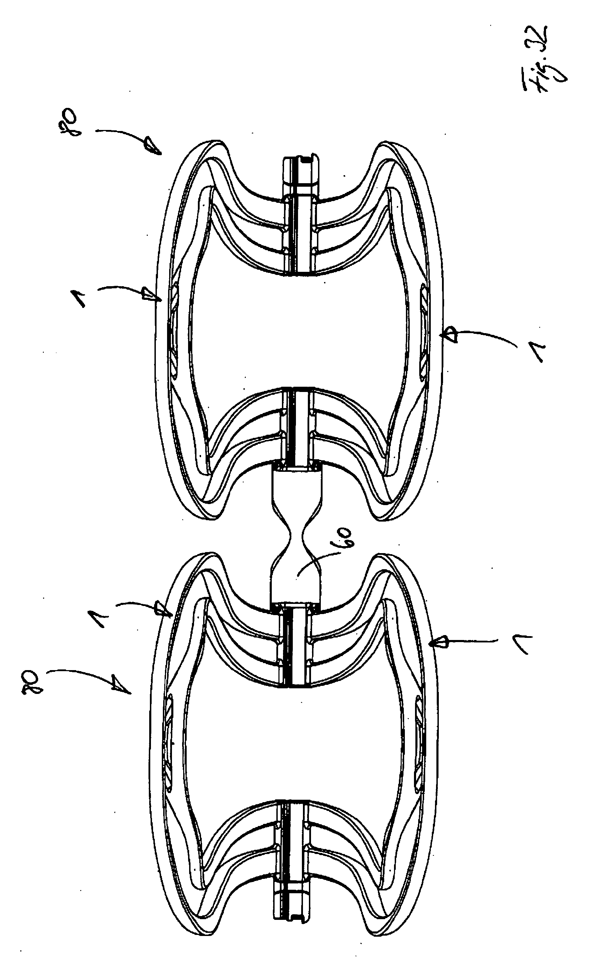

Die Fign. 28 bis 31 lassen eine weitere Verbindungseinrichtung 60 erkennen. Diese Verbindungseinrichtung 60 dient der Koppelung zweier Federmodule 80 wie sie in den Fign. 26 und 27 dargestellt sind. Die Fig. 32 lässt zwei solcher miteinander gekoppelten Federmodule 80 erkennen.

Wie die Fig. 28 bis 31 erkennen lassen, verfügt eine Verbindungseinrichtung 60 zur Kopplung zweier Federmodule 80 über einen zwei Hohlräume 237 zur Verfügung stellenden Grundkörper 61. Dabei dient ein jeweiliger Hohlraum 237 dazu, die miteinander verbundenen Verbindungsabschnitte 90 und 100 bzw. 91 und 101 zweier zu einem Federmodul 80 miteinander kombinierter Federelemente 1 aufzunehmen. Zum Zwecke der sicheren Anordnung stellen die Hohlräume 237 Rastnasen in Form von Raststegen 238 zur Verfügung, die im endmontierten Zustand in zugehörige Rastausnehmungen des Federmoduls 80 eingreifen.

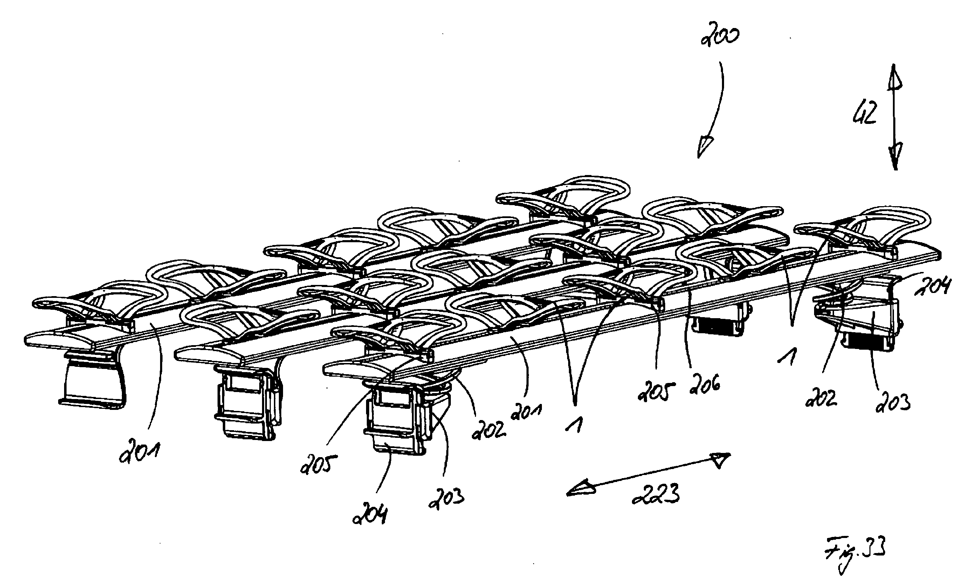

Fig. 33 lässt das erfindungsgemäße Federsystem 200 in schematischer Perspektivdarstellung erkennen. Das Federsystem 200 verfügt über eine Mehrzahl von Federelementen 1 einerseits sowie über eine Mehrzahl von Verbindungsleisten 201 andererseits. Dabei ist eine jede Verbindungsleiste 201 mit einer Mehrzahl von Federelementen 1 ausgerüstet.

Das beispielhaft in Fig. 33 nur schematisch dargestellte Federsystem 200 verfügt über insgesamt fünfzehn Federelemente 1 und drei Verbindungsleisten 201, wobei je Verbindungsleiste 201 fünf Federelemente 1 vorgesehen sind, die jeweils mit Bezug auf die Längsrichtung 223 der Verbindungsleisten 201 beabstandet nebeneinander angeordnet sind.

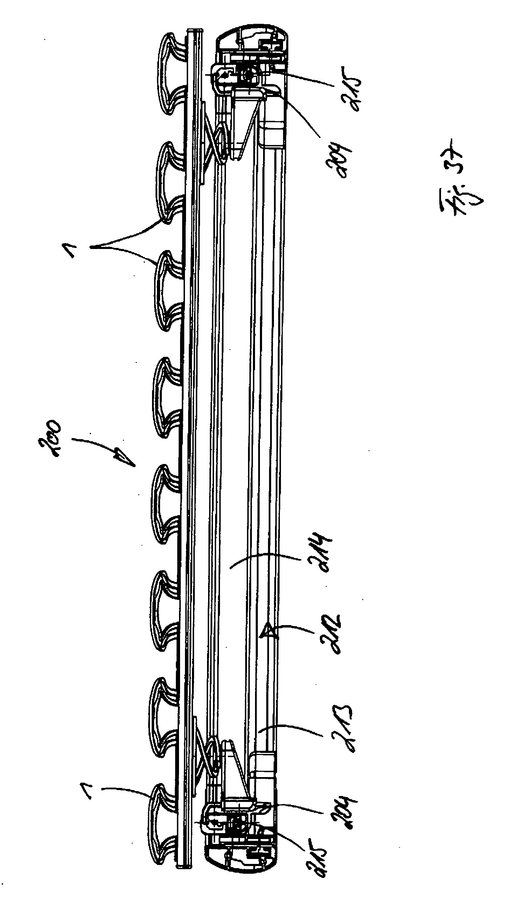

Das in den Figuren beispielhaft dargestellte Federsystem 200 dient der Unterfederung einer in den Figuren nicht näher dargestellten Bettmatratze. Es ist im endmontierten Zustand von einem Rahmen 212, beispielsweise einem Bettrahmen aufgenommen, wie dies die Darstellung nach Fig. 37 zeigt. Gemäß diesem Ausführungsbeispiel ist ein Rahmen 212 vorgesehen, der einen Außenrahmen 213 und einen Innenrahmen 214 aufweist. Der Innenrahmen 214 kann zumindest teilweise relativ verschwenkbar gegenüber dem Außenrahmen 213 ausgebildet sein.

Der Innenrahmen 214 nimmt das erfindungsgemäße Federsystem 200 auf, wobei je Verbindungsleiste 201 des Federsystems 200 zwei Halter 204 vorgesehen sind, die sich im endmontierten Zustand an einem jeweils zugehörigen Längsholm 215 des Innenrahmens 214 abstützen. Wie die Darstellung nach Fig. 37 erkennen lässt, ist ein solcher Halter 204 sowohl einendseitig als auch anderendseitig einer jeden Verbindungsleiste 201 des Federsystems 200 vorgesehen.

Wie insbesondere eine Zusammenschau der Figuren 33, 34 und 36 erkennen lässt, trägt jeder Halter 204 im endmontierten Zustand einen Sockel 203. Dieser Sockel 203 kann in Höhenrichtung 42 verschieblich am Halter 204 angeordnet sein, um eine individuelle Höhenanpassung vornehmen zu können. Ein jeder Sockel 203 stützt die Verbindungsleiste 201 endseitig ab, und zwar unter Zwischenordnung eines Federteils 202. Es wird auf diese Weise eine federelastische Anordnung der Verbindungsleiste 201 am Rahmen 212 gewährleistet.

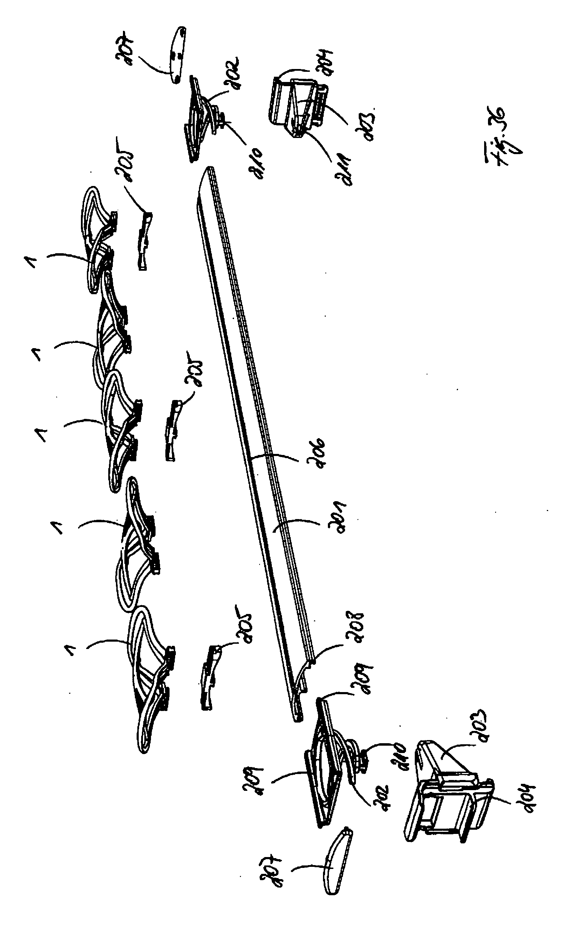

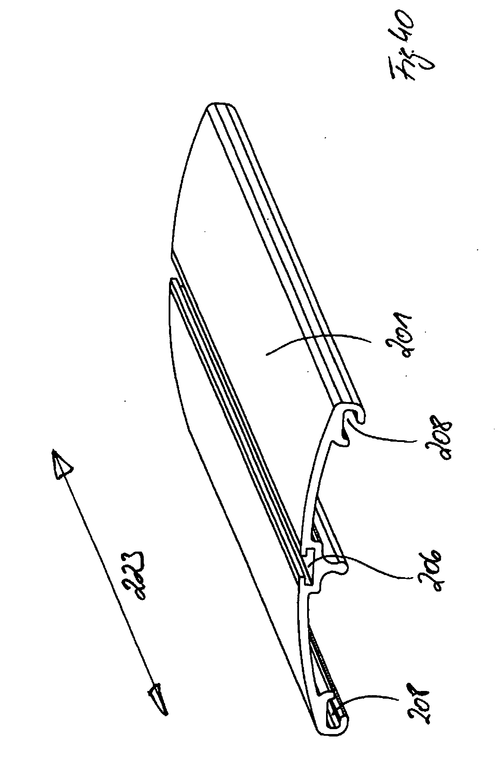

Zur Anordnung eines Federteils 202 an einer Verbindungsleiste 201 verfügt die Verbindungsleiste 201 über Schlitze 208, die in Längsrichtung verlaufend an ihrer mit Bezug auf die Zeichnungsebene nach den Figuren 36 und 40 Unterseite ausgebildet sind. Im endmontierten Zustand greift das Federteil 202 mit Profilabschnitten 209 in diese Schlitze 208 ein, womit ein sicherer Halt der Verbindungsleiste 201 gegenüber dem Federteil 202 erreicht ist.

Um ein ungewolltes Herauswandern des Federteils 202 aus den von der Verbindungsleiste 201 bereitgestellten Schlitzen 208 zu unterbinden, können Endkappen 207 vorgesehen sein, mittels welcher die Schlitze 208 im endmontierten Zustand verschlossen sind, wie beispielsweise die Darstellung nach Fig. 33 erkennen lässt.

Zur Anbindung des Federteils 202 am Sockel 203 ist federteilseitig ein Fuß 210 vorgesehen, der in eine korrespondierend hierzu ausgebildete Aufnahme 211 des Sockels 203 im endmontierten Zustand eingreift. Die Aufnahme 211 kann beispielsweise eine T-förmig ausgebildete Nut sein. Der Fuß 210 weist in diesem Fall eine gleichfalls T-förmig ausgebildete Gegenkontur auf.

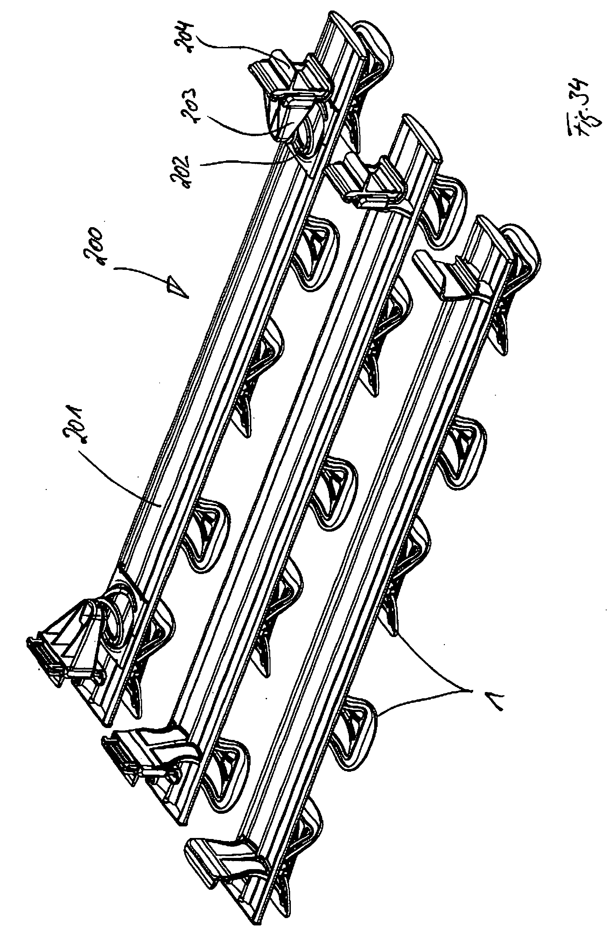

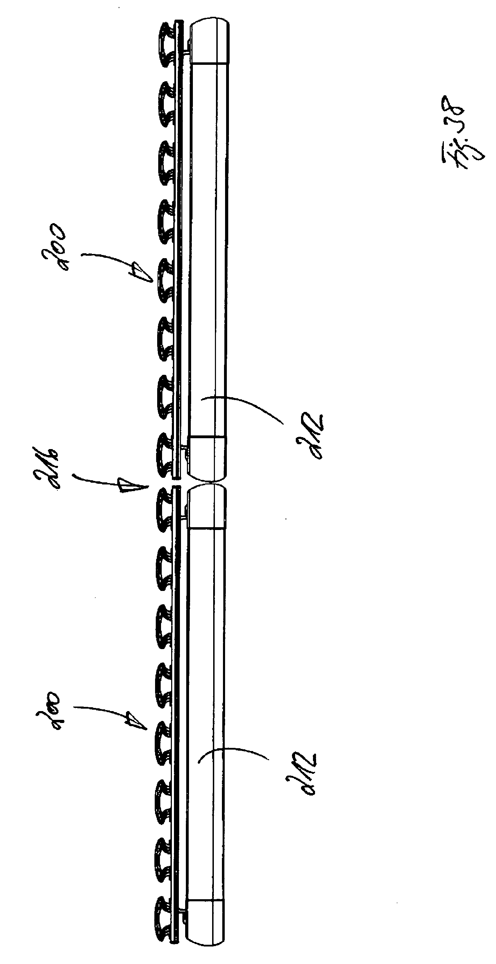

Fig. 34 lässt die vorbeschriebene Ausgestaltung in einer Ansicht von unten erkennen. Wie sich aus dieser Darstellung ergibt, können die Federteile 202 in ihrer relativen Lage in Längsrichtung 223 frei an der Verbindungsleiste 201 positioniert werden. Die die Profilabschnitte 209 der Federteile 202 aufnehmenden Schlitze 208 der Verbindungsleiste 201 sind durchgehend in Längsrichtung 223 ausgebildet. Diese Ausgestaltung macht es im Unterschied zum Stand der Technik möglich, Verbindungsleisten 201 verwenden zu können, die hinsichtlich ihrer Längserstreckung 223 größer als der vom Rahmen 212 zur Verfügung gestellte lichte Abstand zwischen den jeweiligen Längsholmen ist. Dieser Sachzusammenhang ergibt sich insbesondere aus der Darstellung nach Fig. 37, der zu entnehmen ist, dass sich die Verbindungsleiste 201 mit Bezug auf die Zeichnungsebene nach Fig. 37 oberhalb des Rahmens 212 erstreckt und in Längsrichtung 223 eine solche Erstreckung aufweist, die der äußeren Außenrahmenbreite entspricht. In vorteilhafter Weise können die von einer Verbindungsleiste 201 mit Bezug auf die Zeichnungsebene nach Fig. 37 linksseitig und rechtsseitig getragenen Federelemente 1 direkt oberhalb des Rahmens 212 positioniert werden. Bei der Verwendung zweier Rahmen 212, wie dies typischerweise bei einem Doppelbett der Fall ist, ergibt sich so in vorteilhafter Weise ein im Unterschied zum Stand der Technik verkleinerter Freiraum 216 zwischen den jeweils endseitigen Federelementen 1 der von den benachbarten Rahmen 212 getragenen Federsysteme 200, wie sich dies aus Fig. 38 ergibt. Der Freiraum 216 zwischen Federelementen 1 benachbarter Federsysteme 200 ist nicht größer als der Abstand zwischen benachbarten Federelementen 1 ein und desselben Federsystems 200, wodurch eine einheitliche und durchgehende Gesamtliegefläche, d.h. Aufnahmefläche für eine Bettmatratze zur Verfügung gestellt ist.

Zur Anordnung von Federelementen 1 an einer Verbindungsleiste 201 verfügt die Verbindungsleiste 201 über eine in Längsrichtung 223 verlaufende T-förmige Nut 206, wie sich insbesondere aus der Darstellung nach Fig. 40 ergibt. Diese Nut 206 dient der Verbindung der Verbindungsleiste 201 mit den Federelementen 1.

Ein solches Federelement 1 ist in den Figuren 11 bis 14 in unterschiedlichen Ansichten dargestellt.

Zur Befestigung eines Federelements 1 an einer Verbindungsleiste 201 ist das Federelement 1 mit seinen von den Verbindungsabschnitten 100 und 101 jeweils getragenen Verbindungsstücken 102 in die T-förmige Nut 206 der Verbindungsleiste 201 einzufädeln. Dabei kann das Federelement 1 Längsrichtung 223, das heißt in Richtung der T-förmigen Nut 206 frei in seiner relativen Lage gegenüber der Verbindungsleiste 201 positioniert werden.

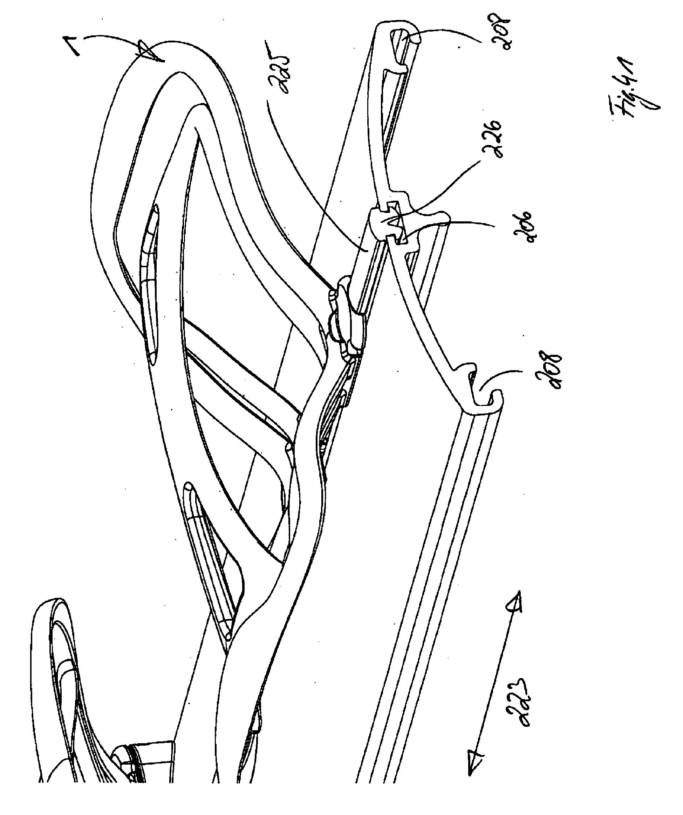

Gemäß einem besonderen Vorteil der Erfindung können zwischen zwei benachbarten Federelementen 1 einer Verbindungsleiste 201 Abstandshalter 224 vorgesehen sein. Ein solcher Abstandshalter 224 ist beispielhaft in Figur 41 dargestellt. Dieser verfügt über einen Grundkörper 225 sowie einen Spreizabschnitt 226. Im endmontierten Zustand greift der Spreizabschnitt 226 des Abstandshalters 224 in die T-förmige Nut 206 der Verbindungsleiste 201 ein, wie in Figur 9 dargestellt.

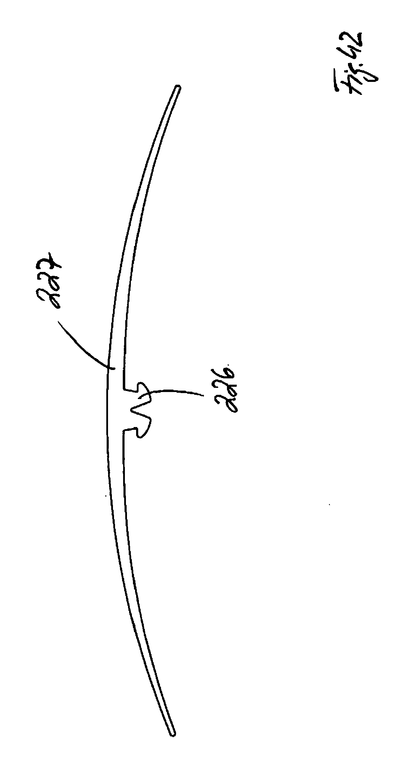

Anstelle eines Abstandshalters 224 kann zur Beabstandung zweier Federelemente 1 auch eine die Verbindungsleiste 201 oberseitig abdeckende Abdeckung 227 zum Einsatz kommen, wie sie in schematischer Frontansicht in Fig. 42 dargestellt ist. Auch die Abdeckung 227 verfügt leistenseitig über einen Spreizabschnitt 226, der im endmontierten Zustand nach Art eines Ankers in die T-förmige Nut 206 der Verbindungsleiste 201 eingreift. Die Abdeckung 227 kann mit Bezug auf die Zeichnungsebene nach Fig. 42 oberseitig ein im Besonderen ausgebildetes Dekor bereitstellen, was den visuellen Gesamteindruck einer so ausgerüsteten Verbindungsleiste 201 aufwertet.

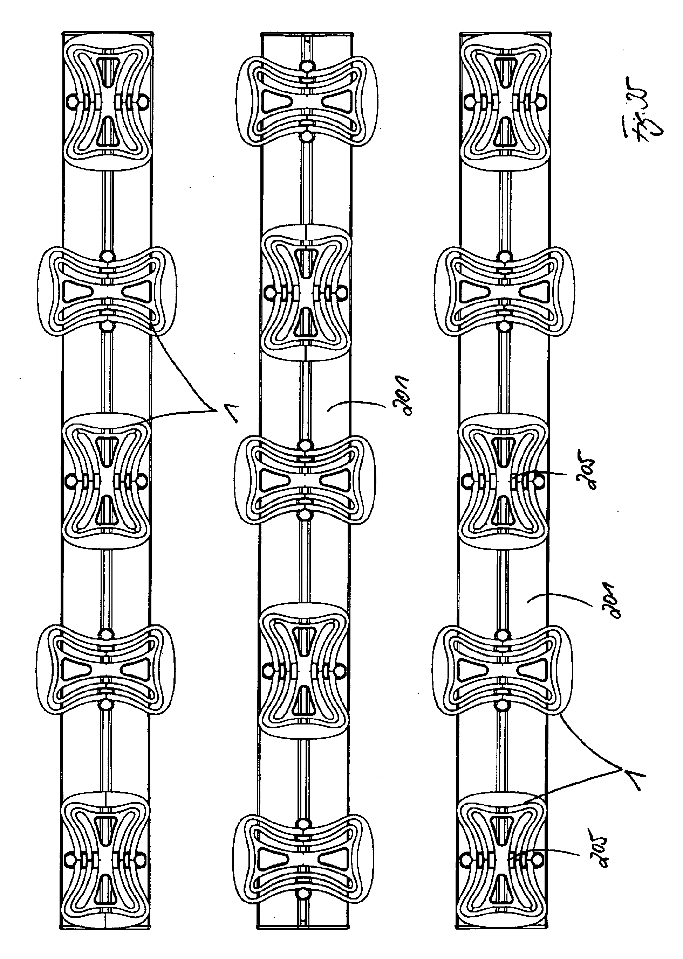

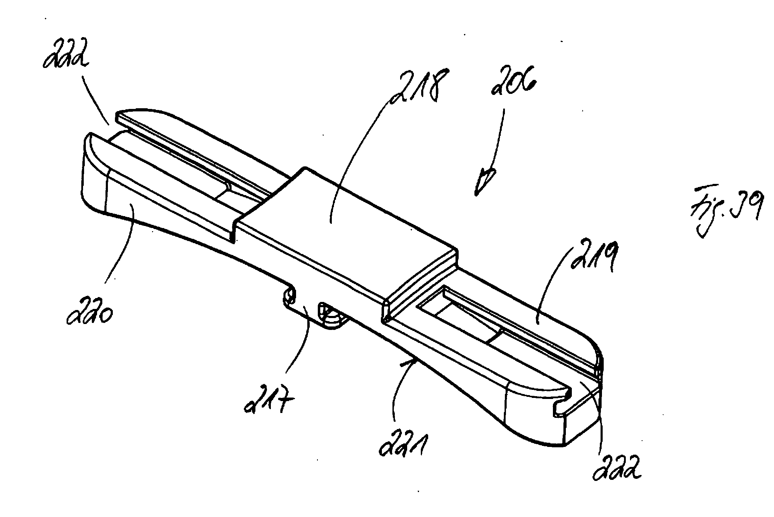

Gemäß einem weiteren Merkmal der Erfindung ist ein Adapter 205 vorgesehen, wie er in Fig. 39 dargestellt ist. Er dient der Zwischenordnung zwischen einem Federelement 1 und der Verbindungsleiste 201, wobei eine um 90° Grad verdrehte Anordnung des Federelements 1 relativ gegenüber der Verbindungsleiste 201 gestattet ist, wie insbesondere die Darstellung nach Fig. 35 erkennen lässt. Ohne Zwischenordnung eines Adapters 205 ist die Längsrichtung 40 eines Federelements 1 quer zur Längsrichtung 223 einer Verbindungsleiste 201 ausgerichtet. Bei Zwischenordnung eines Adapters 205 fallen die Längsrichtung 40 eines Federelements 1 und die Längsrichtung 223 einer Verbindungsleiste 201 zusammen. Die mit Hilfe eines Adapters 205 um 90° Grad verdrehte Anordnung eines Federelements 1 gestattet ist, eine "verzahnte" Auflagefläche für eine Bettmatratze zu schaffen, wodurch der insgesamt bereitgestellte Federkomfort verbessert ist.

Wie Fig. 39 erkennen lässt, verfügt der Adapter 205 über eine Basis 218. Diese Basis 218 trägt mit Bezug auf die Zeichnungsebene nach Fig. 39 unterseitig ein T-förmiges Koppelelement 217. Dieses ist korrespondierend zur T-förmigen Nut 206 der Verbindungsleiste 201 ausgebildet.

An die Basis 218 schließen sich mit Bezug auf die Zeichnungsebene nach Fig. 39 links-wie rechtsseitig Flügel 219 bzw. 220 an. Diese Flügel 219 und 220 dienen der Verbindung des Adapters 205 mit einem Federelement 1. Zu diesem Zweck stellen die Flügel 219 und 220 jeweils eine T-förmige Nut 222 zur Verfügung, die korrespondierend zu den T-förmigen Verbindungsstücken 102 der Verbindungsabschnitte 100 und 101 des Federelements 1 ausgebildet ist.

Die von den Flügeln 219 und 220 bereitgestellte Innenkontur 221 ist im Übrigen an die ballig ausgebildete Außenkontur der Verbindungsleisten 201 angepasst, so dass im endfertig montiertem Zustand ein spaltfreies Anliegen des Adapters 205 an einer Verbindungsleiste 201 sichergestellt ist, wie dies auch die Darstellung nach Fig. 33 erkennen lässt.

Die in den Fign. 33 bis 40 gezeigte Verbindungsleiste 201 ist eine selbsttragende Leiste, das heißt eine Verbindungsleiste 201 die ohne weitere Abstützung durch eine Tragunterlage auskommt. Sie nimmt die im bestimmungsgemäßen Verwendungsfall auftretenden Belastungskräfte auf und leitet sie beispielsweise in einen Rahmen 212 ab.

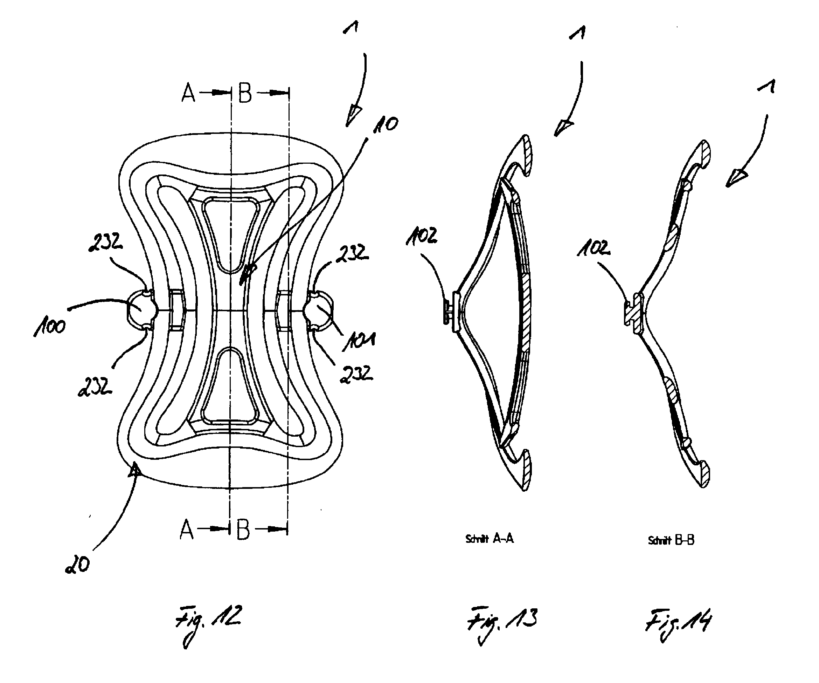

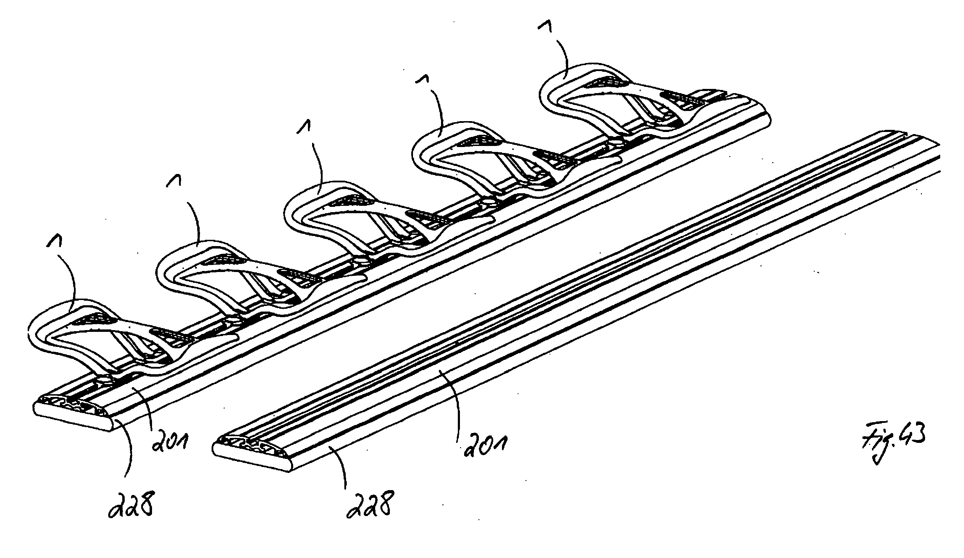

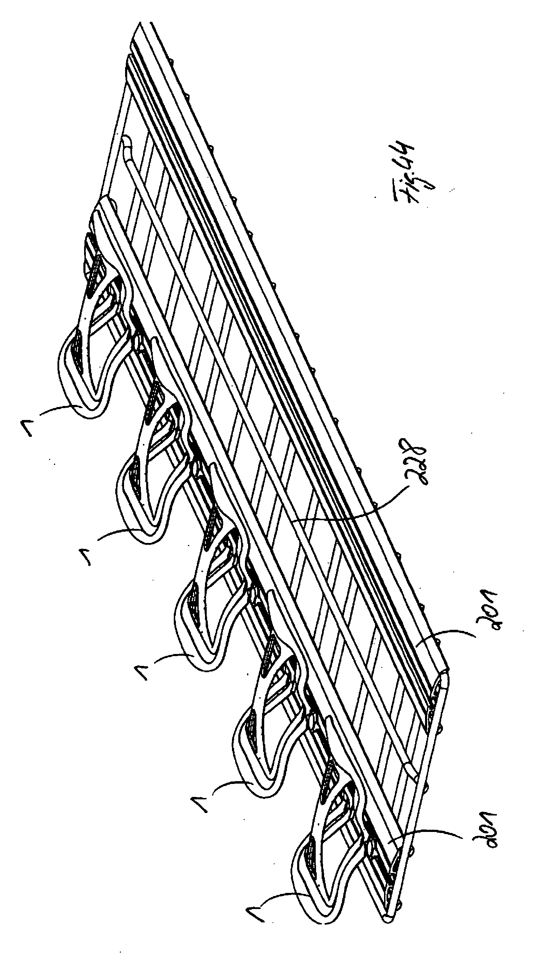

Gemäß einer alternativen Ausgestaltung der Erfindung kann vorgesehen sein, dass die Verbindungsleiste 201 nicht selbsttragend ausgebildet ist. Im endmontierten Zustand bedarf es deshalb zum Abfangen bestimmungsgemäß auftretender Kräfte einer Tragunterlagen 228. Diese alternative Ausgestaltung ist in den Fig. 43 und 44 dargestellt, wobei Fig. 11 eine erste Variante und Fig. 12 eine zweite Variante zeigt.

Fig. 43 zeigt eine Variante, der gemäß eine Verbindungsleiste 201 auf eine Latte, beispielsweise eine Lattenrostlatte als Tragunterlage 228 aufgebracht ist. Die Tragfunktion übernimmt in diesem Fall die Tragunterlagen 228, wobei die Verbindungsleiste 201 die Aufgabe übernimmt, die Federelemente 1 mit der Tragunterlagen 228 zu verbinden. Diese Ausführungsvariante eignet sich insbesondere im Falle einer Nachausrüstung, um also einen aus dem Stand der Technik an sich bekannten Lattenrost mit Federelementen 1 zu bestücken. Dabei ist jeder Latte als Tragunterlagen 228 eine jeweilige Verbindungsleiste 201 zuzuordnen, wie sich aus der Darstellung nach Fig. 43 ergibt. Eine Alternative zeigt Fig. 44. Danach kommt als Tragunterlagen 228 eine netzgitterartige Struktur zum Einsatz. Dabei trägt im Unterschied zur Variante nach Fig. 43 die Tragunterlage 228 nach Figur 44 nicht nur eine, sondern mehrere Verbindungsleisten 201, im gezeigten Ausführungsbeispiel zwei solcher Verbindungsleisten 201.

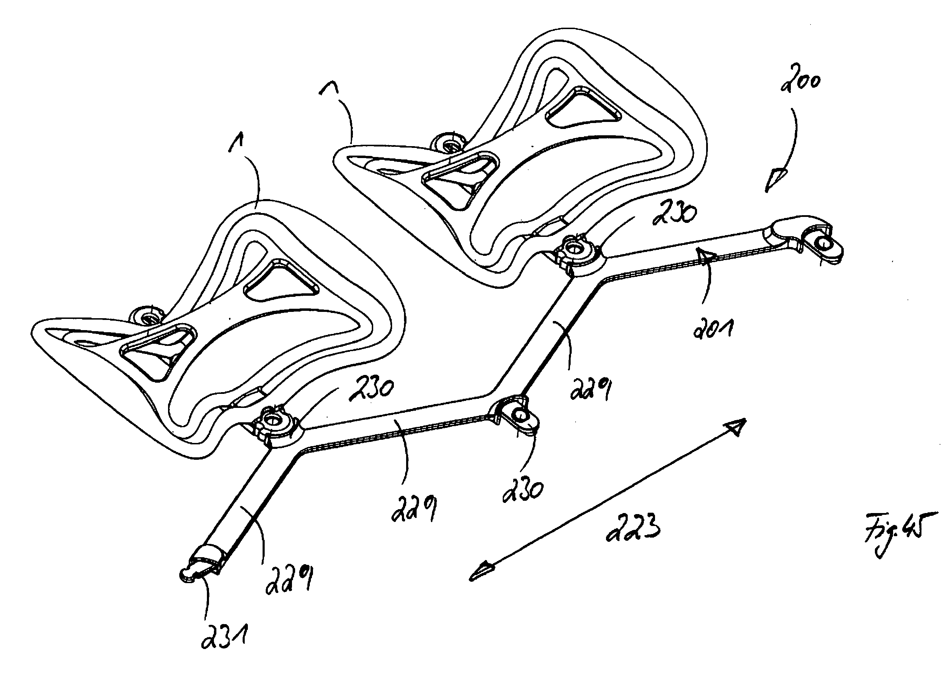

Eine alternative Ausgestaltung der Verbindungsleiste 201 ist in Fig. 45 gezeigt.

Gemäß dieser Alternative verfügt die Verbindungsleiste 201 über Abschnitte 229, die in Längsrichtung 223 abgewinkelt zueinander ausgerichtet sind. Durch diese abgewinkelte Ausgestaltung entsteht eine "Zick-Zack"-förmige Kontur der Verbindungsleiste 201.

Zur Verbindung der Verbindungsleiste 201 mit Federelementen 1 verfügt die Verbindungsleiste 201 über Verbindungsstücke 230. Diese sind jeweils in einem Verbindungsbereich zweier Abschnitte 229 ausgebildet und erstrecken sich quer zur Längsrichtung 223. Die Verbindungsstücke 230 sind im Querschnitt T-förmig ausgebildet und wirken mit Verbindungsabschnitten 90 und 91 der Federelemente 1 zusammen, die jeweils über eine T-förmig ausgebildete Nut 92 verfügen, welcher Sachzusammenhang sich hinsichtlich der Federelemente 1 insbesondere aus den Figuren 15 bis 18 ergibt.

Einendseitig einer jeden Verbindungsleiste 201 ist eine Lasche 231 ausgebildet. Diese greift im endmontieren Zustand in eine korrespondierend hierzu ausgebildete Tasche, die anderendseitig einer benachbarten Verbindungsleiste 201 ausgebildet ist. Auf diese Weise können eine Mehrzahl von Verbindungsleisten 201 zu einer "Endlosleiste" miteinander kombiniert werden.

Das mit der Verbindungsleiste 201 nach Figur 45 kombinierbare Federelement 1 ist in den Figuren 15 bis 18 dargestellt. Dieses Federelement 1 entspricht im Wesentlichen dem schon vorbeschriebenen Federelement 1 nach den Figuren 11 bis 14. Im Unterschied zum vorerläuterten Federelement 1 verfügt das Federelement 1 nach den Figuren 15 bis 18 jedoch über andere Verbindungsabschnitte, nämlich die Verbindungsabschnitte 90 und 91. Diese stellen kein Verbindungsstück, sondern eine T-förmige Nut 92 bereit. Insofern ist das in den Fign. 15 bis 18 dargestellte Federelement 1 zur Ankopplung an eine Verbindungsleiste 201 nach Fig. 45 und das Federelement 1 gemäß der Fign. 11 bis 14 für eine Ankopplung an eine Verbindungsleiste 201 beispielsweise nach Fig. 33 geeignet.

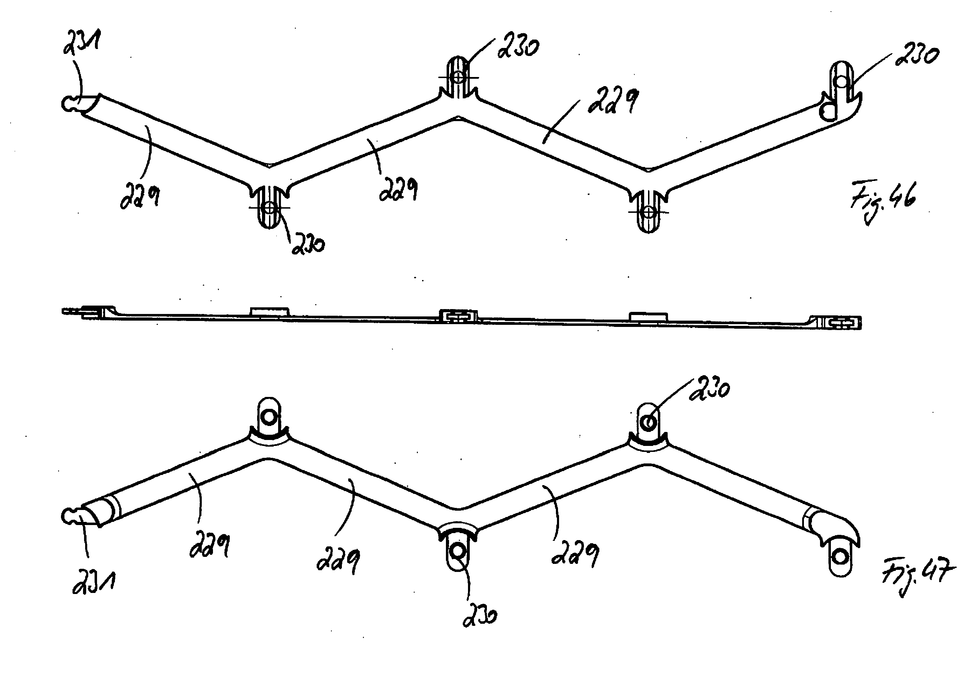

Die Fign. 46 und 47 lassen schließlich die Ausführungsform der Verbindungsleiste 201 nach Fig. 45 näher erkennen, und zwar in einer Draufsicht von unten nach Fig. 46 und in einer Draufsicht von oben nach Fig. 47. Dabei lässt insbesondere die Darstellung nach Fig. 46 die T-förmige Ausgestaltung der Verbindungsstücke 230 erkennen.

Wie den Fign. 46 und 47 desweiteren entnommen werden kann, verfügen die Laschen 231 zur Verbindung zweier Verbindungsleisten 201 über teilkreisförmige Rastausnehmungen, die in korrespondierend hierzu ausgebildete Rastnasen der Verbindungstasche der anderen Verbindungsleiste 201 im endmontierten Zustand einrasten.

Im gezeigten Ausführungsbeispiel schließen die Abschnitte 229 einer Verbindungsleiste 201 jeweils einen Winkel von ca. 136° Grad ein.

### Bezugszeichenliste

- 1: Federelement
- 10: Federkörper
- 11: Ringteil
- 12: Mittelabschnitt
- 13: erster Ringteilabschnitt
- 14: zweiter Ringteilabschnitt
- 15: erster Endbereich
- 16: zweiter Endbereich
- 17: erster Verbindungsfortsatz
- 18: zweiter Verbindungsfortsatz
- 19: Bohrung
- 20: zweiter Federkörper
- 21: Ringteil
- 22: Mittelabschnitt
- 23: erster Ringteilabschnitt
- 24: zweiter Ringteilabschnitt
- 25: erster Endbereich
- 26: zweiter Endbereich
- 27: erstes Koppelelement
- 28: zweites Koppelelement
- 29: Stift/Bohrung
- 30: Aufnahmeabschnitt
- 31: Durchbruch
- 40: Längsrichtung
- 41: Querrichtung
- 42: Höhenrichtung
- 50: Verdickung
- 60: Verbindungseinrichtung
- 61: Grundkörper
- 62: erster Verbindungsabschnitt
- 63: zweiter Verbindungsabschnitt
- 64: Bohrung
- 65: Steg
- 66: Ausnehmung
- 70: Federelementmatte
- 71: Verbinder
- 72: Verbindungsstellen
- 80: Federmodul
- 81: Verbindungsbereich
- 90: erster Verbindungsabschnitt
- 91: zweiter Verbindungsabschnitt
- 92: T-förmige Nut
- 100: erster Verbindungsabschnitt
- 101: zweiter Verbindungsabschnitt
- 102: T-förmiges Verbindungsstück
- 200: Federsystem
- 201: Verbindungsleiste
- 202: Federteil
- 203: Sockel
- 204: Halter
- 205: Adapter
- 206: T-förmige Nut
- 207: Endkappe
- 208: Schlitz
- 209: Profilabschnitt
- 210: Fuß
- 211: Aufnahme
- 212: Rahmen
- 213: Außenrahmen
- 214: Innenrahmen
- 215: Längsholm
- 216: Freiraum
- 217: T-förmiges Koppelelement
- 218: Basis
- 219: Flügel
- 220: Flügel
- 221: Innenkontur
- 222: T-förmige Nut
- 223: Längsrichtung
- 224: Abstandshalter
- 225: Grundkörper
- 226: Spreizabschnitt
- 227: Abdeckung
- 228: Tragunterlage
- 229: Abschnitt
- 230: Verbindungsstück
- 231: Lasche
- 232: Rastausnehmung
- 233: Rastnase
- 234: Innenkontur
- 235: Rastfortsatz
- 236: Abschlussfläche
- 237: Hohlraum
- 238: Raststeg

## Patentansprüche

1. Federelement für eine Polstereinrichtung eines Sitz- und/oder Liegemöbels, insbesondere für eine Bettmatratze, mit einem Federkörper (10) und einem daran angeordneten Aufnahmeabschnitt (30), wobei der Federkörper (10) und der Aufnahmeabschnitt (30) einstückig aus Kunststoff spritzgegossen sind,
**dadurch gekennzeichnet,**
**dass** der Federkörper (10) als in Längsrichtung (40) gestrecktes Ringteil (11) ausgebildet ist, das zwei in einem Mittelabschnitt (12) einstückig ineinander übergehende Ringteilabschnitte (13, 14) aufweist, die jeweils ausgehend vom Mittelabschnitt (12) in Höhenrichtung (42) aufwärtssteigend ausgebildet sind, wobei die in Längsrichtung (40) einander gegenüberliegenden Endbereiche (15, 16) der Ringteilabschnitte (13, 14) unter Zwischenordnung des Aufnahmeabschnitts (30) miteinander verbunden sind.

2. Federelement nach Anspruch 1, **dadurch gekennzeichnet, dass** das Ringteil (11) im Bereich des Mittelabschnitts (12) tailliert ausgebildet ist.

3. Federelement nach Anspruch 1 oder 2, **dadurch gekennzeichnet, dass** der Aufnahmeabschnitt (30) als tailliertes Streifenelement ausgebildet ist.

4. Federelement nach Anspruch 3, **dadurch gekennzeichnet, dass** das Streifenelement mit Bezug auf seine Längserstreckung (40) ballig ausgebildet ist.

5. Federelement nach einem der vorhergehenden Ansprüche, **dadurch gekennzeichnet, dass** der Mittelabschnitt (12) ringteilaußenseitig zwei einander in Querrichtung (41) des Ringteils (11) gegenüberliegende Verbindungsfortsätze (16, 17) trägt, die vorzugsweise einstückig mit dem Ringteil (11) ausgebildet sind.

6. Federelement nach einem der vorhergehenden Ansprüche, **gekennzeichnet durch** einen zweiten Federkörper (20), der als in Längsrichtung (40) gestrecktes Ringteil (21) ausgebildet ist, das zwei in einem Mittelabschnitt (22) einstückig ineinander übergehende Ringteilabschnitte (23, 24) aufweist, die jeweils ausgehend vom Mittelabschnitt (22) in Höhenrichtung (42) aufwärtssteigend ausgebildet sind.

7. Federelement nach Anspruch 6, **dadurch gekennzeichnet, dass** das Ringteil (21) des zweiten Federkörpers (20) das Ringteil (11) des ersten Federkörpers (10) umschließt.

8. Federelement nach Anspruch 6 oder 7, **dadurch gekennzeichnet, dass** die beiden Federkörper (10, 20) einstückig ausgebildet sind, wobei die Federkörper (10, 20) unter Zwischenordnung der Verbindungsfortsätze (17, 18) des ersten Federkörpers (10) miteinander verbunden sind.

9. Federelement nach einem der vorhergehenden Ansprüche 6 bis 8, **dadurch gekennzeichnet, dass** der Mittelabschnitt (22) des zweiten Federkörpers (20) ringteilaußenseitig zwei einander in Querrichtung (41) des Ringteils (21) gegenüberliegende Koppelelemente (27, 28) oder Verbindungsabschnitte (90, 91; 100, 101) trägt, die vorzugsweise einstückig mit dem Ringteil (21) ausgebildet sind.

10. Federelement nach Anspruch 9, **dadurch gekennzeichnet, dass** die Verbindungsabschnitte 90, 91; 100, 101 jeweils entweder eine T-förmige Nut 92 oder ein T-förmiges Verbindungsstück 102 bereitstellen.

## Claims

1. Spring element for upholstery of seating furniture and/or a lounger, particularly a bed mattress, comprising a spring body (10) and a receiving section (30) arranged thereon, said spring body (10) and said receiving section (30) being integrally formed from a plastic material by injection molding,
**characterized in**
**that** said spring body (10) is formed as a ring member (11) elongated in the longitudinal direction and comprising two ring member sections (13, 14) merging into each other in a central portion (12) and being configured in such a manner as to respectively ascend in the height direction (42) from said central portion (12), the end portions (15, 16) of the ring member sections (13, 14) opposite to each other in the longitudinal direction (40) being connected to each other under the interposition of said receiving section (30).

2. Spring element according to claim 1, **characterized in that** said ring member (11) is configured in such a manner as to be waisted in the region of the central portion (12).

3. Spring element according to claim 1 or 2, **characterized in that** the receiving section (30) is configured as a waisted strip element.

4. Spring element according to claim 3, **characterized in that** said strip element is configured spherically with respect to its longitudinal extension (40).

5. Spring element according to one of the preceding claims, **characterized in that** on the outside of said ring member, said central portion (12) comprises two connection appendices (16, 17) opposite to each other in the transverse direction which are preferably integrally formed with said ring member (11).

6. Spring element according to one of the preceding claims, **characterized by** a second spring body (20) formed as a ring member (21) elongated in the longitudinal direction (40) and comprising two ring member sections (23, 24) merging into each other in a central portion (22) and being configured in such a manner as to respectively ascend in the height direction (42) from said central portion (22).

7. Spring element according to claim 6, **characterized in that** the ring member (21) of the second spring body (20) surrounds the first spring body (10).

8. Spring element according to claim 6 or 7, **characterized in that** said two spring bodies (10, 20) are formed as one piece and the spring bodies (10, 20) are connected to each other under the interposition of the connection appendices (17, 18) of said first spring body (10).

9. Spring element according to one of the preceding claims 6 to 8, **characterized in that** on the outside of said ring member, said central portion (22) of the second spring body (20) carries to coupling elements (27, 28) or connecting portions (90, 91; 100, 101) that are preferably integrally formed with said ring member (21).

10. Spring element according to claim 8, **characterized in that** said connecting portions (90, 91; 100, 101) each provide either a T-shaped groove (92) or a T-shaped connector (102).

## Revendications

1. Élément ressort pour un dispositif de matelassure d'un meuble siège et/ou couchette, notamment pour un matelas de lit, comprenant un corps de ressort (10) et une partie de réception (30) disposée sur celui-ci, ledit corps de ressort (10) et la partie de réception (30) étant formés en une pièce par moulage par injection d'un matière plastique,
**caractérisé en ce**
**que** le corps de ressort (10) est configuré comme une pièce à bague (11) allongée en direction longitudinale et comprenant deux parties de pièce à bague (13, 14), l'une étant en continuité avec l'autre de manière monobloc dans une partie centrale, chacune desdites parties de pièce à bague étant configurée de manière à monter vers le haut en direction d'hauteur (42) à partir de la partie centrale (12), les parties d'extrémité (15, 16) des parties de pièce à bague (13, 14) opposées l'une à l'autre en direction longitudinale (40) étant reliées l'une à l'autre, avec la partie de réception (30) intercalée.

2. Élément ressort selon la revendication 1, **caractérisé en ce que** la pièce à bague (11) est formée de manière cintrée dans la zone de la partie centrale (12).

3. Élément ressort selon la revendication 1 ou 2, **caractérisé en ce que** la partie de réception (30) est formée comme un élément à lame cintré.

4. Élément ressort selon la revendication 3, **caractérisé en ce que** l'élément à lame est formé de manière sphérique par rapport à son étendue longitudinale (40).

5. Élément ressort selon l'une des revendications précédentes, **caractérisé en ce que** la partie centrale (12) extérieurement de la pièce à bague porte deux appendices de liaison (16, 17) opposés l'un à l'autre en direction transversale (41) de la pièce à bague (11) et formés de préférence en une pièce avec la pièce à bague (11).

6. Élément ressort selon l'une des revendications précédentes, **caractérisé par** un deuxième corps de ressort (20) formé comme une pièce à bague (21) allongée en direction longitudinale et comprenant deux parties de pièce à bague (23, 24), l'une étant en continuité avec l'autre de manière monobloc dans une partie centrale, chacune desdites parties de pièce à bague étant configurée de manière à monter vers le haut en direction d'hauteur (42) à partir de la partie centrale (12).

7. Élément ressort selon la revendication 8, **caractérisé en ce que** la pièce à bague (21) du deuxième corps de ressort (20) environne la pièce à bague (11) du premier corps de ressort (10).

8. Élément ressort selon la revendication 6 ou 7, **caractérisé en ce que** les deux corps de ressort (10, 20) sont formés en une pièce, lesdits corps de ressort (10, 20) étant reliés l'un à l'autre en intercalant les appendices de liaison (17, 18) du premier corps de ressort (10).

9. Élément ressort selon l'une des revendications 6 à 8, **caractérisé en ce que** extérieurement de la pièce à bague, la partie centrale (22) du deuxième corps de ressort (20) porte deux éléments de couplage (27, 28) ou parties de liaison (90, 91; 100, 101) opposés les uns aux autres en direction transversale (41) de la pièce à bague (21) et formés de préférence en une pièce avec la pièce à bague (21).

10. Élément de ressort selon la revendication 9, **caractérisé en ce que** chacune des parties de liaison (90, 91; 100, 101) présentant soit une rainure en forme de T (92) soit un connecteur (102) en forme de T.
